(19) Europäisches Patentamt
European Patent Office
Office européen des brevets

(11) EP 0 551 965 B1

(12) EUROPEAN PATENT SPECIFICATION

(45) Date of publication and mention of the grant of the patent:
**20.08.1997 Bulletin 1997/34**

(51) Int Cl.[6]: **G11B 7/24**, G11B 9/00, G11B 9/04, G11B 9/08, G11B 9/10, G11B 11/00, G11B 11/08, G11B 11/12

(21) Application number: **93200796.6**

(22) Date of filing: **28.06.1988**

# (54) Recording device and reproducing device

Aufzeichnungsgerät und Wiedergabegerät

Appareil d'enregistrement et appareil de reproduction

(84) Designated Contracting States:
**AT BE CH ES GR IT LI LU NL SE**

(30) Priority: **31.07.1987 JP 191862/87**
**31.07.1987 JP 191863/87**

(43) Date of publication of application:
**21.07.1993 Bulletin 1993/29**

(62) Document number(s) of the earlier application(s) in accordance with Art. 76 EPC:
**88305862.0 / 0 305 033**

(73) Proprietor: **CANON KABUSHIKI KAISHA**
**Tokyo (JP)**

(72) Inventors:
- **Eguchi, Ken**
  **Atsugi-shi, Kanagawa-ken (JP)**
- **Kawada, Haruki**
  **Atsugi-shi, Kanagawa-ken (JP)**
- **Sakai, Kunihiro**
  **Yamato-shi, Kanagawa-ken (JP)**
- **Matsuda, Hiroshi**
  **Yokohama-shi, Kanagawa-ken (JP)**
- **Morikawa, Yuko**
  **Kawasaki-shi, Kanagawa-ken (JP)**
- **Nakagiri, Takashi**
  **Tokyo (JP)**
- **Hamamoto, Takashi**
  **Yokohama-shi, Kanagawa-ken (JP)**
- **Kuribayashi, Masaki**
  **Inagi-shi, Tokyo (JP)**
- **Kawade, Hisaaki**
  **Atsugi-shi, Kanagawa-ken (JP)**
- **Yanagisawa, Yoshihiro**
  **Atsugi-shi, Kanagawa-ken (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 174 860**
**EP-A- 0 247 219**
**GB-A- 2 051 456**
**GB-A- 2 182 480**
**US-A- 4 575 822**

- **HELVETICA PHYSICA ACTA vol. 55, no. 6, 1982, pages 726 - 735 BINNIG & AL. 'Scanning tunneling microscopy'**
- **PATENT ABSTRACTS OF JAPAN vol. 9, no. 037 (P-335) 16 February 1985 & JP-A-59 178 603**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 551 965 B1

## Description

### BACKGROUND OF THE INVENTION

### Field of the Invention

This invention relates to a device and a method for recording and/or reproducing information.

### Related Background Art

In recent years, memory materials have formed the basis of electronic devices such as computers and related instruments, video discs and digital audio discs. Memory materials have been under active development. The performance required for memory materials differs depending upon the use to which the material is to be put, but may generally include:

(1) high density and large recording capacity;
(2) rapid speed of recording and reproduction;
(3) small power consumption; and
(4) ability to be produced rapidly and at low cost.

Up to now the predominant memory devices have been semiconductor memories or magnetic memories in which a semiconductor or a magnetic material is employed as the base material. With the development of lasers, inexpensive and high density recording media have emerged based on optical memory using an organic thin film such as an organic dye, or a photopolymer.

There has recently been developed a scanning type tunnel microscope (hereinafter abbreviated as STM) which is capable of observing directly the electron structure of the surface atoms of a conductor [G. Binning et al, Helveica Physica Acta, 55 , 726 (1982)]. With this microscope it has become possible to produce a real space image of both single crystalline and amorphous materials at high resolving power. The microscope has the advantage that observations can be made at low power consumption at which the medium is not damaged. Furthermore, the microscope works in air and can be used to examine a variety of materials, so that it finds a wide range of uses.

STM is based on the phenomenon that a tunnel current flows when a voltage is applied between a probe and an electroconductive substance, and the probe is caused to approach to a distance of about 1 nm from that substance. This current is very sensitive to the distance between the probe and the electroconductive substance, and by scanning the probe so that the tunnel current is maintained at a constant value, a drawing can be produced of the surface structure in real space and at the same time a variety of information can be read concerning the total electron cloud of the surface atoms. Although analysis by the use of STM is limited to electroconductive materials, its use for analysing the structure of a monomolecular film formed on the surface of an electroconductive material has been proposed [see H. Fuchs et al, Surface Science, 8(1987) 391-393].

An electostatic recording method is also known in which a latent image is formed by a current from a needle-like electrode, and a large number of applications using recording paper have been suggested (Japanese laid open patent publication no. 3435-1974) The film thickness used in this electrostatic recording medium is in the order of microns, and there has been no exemplification of electrically reading or reproducing the latent image.

Molecular electronic devices have also been proposed in which a single organic molecule functions as a logic element or memory element. There has been considerable study of Langmuir-Blodgett films (hereinafter abbreviated as LB film) which can be regarded as one of the constructional elements of a molecular electronic device. A Langmuir-Blodgett film has organic molecules laminated regularly one molecular layer on another, and the film thickness can be adjusted in units of molecular length, so that uniform and homogenous ultra-thin films can be formed. Many attempts have been made to use LB films as the insulating film in devices using this feature, for example tunnel junction elements of a metal-insulator-metal (MIM) structure have been disclosed [G.L. Larkins et al, Thin Solid Films, 99 (1983)], an electroluminescent element having a metal-insulator-semiconductor (MIS) structure [G.G. Roberts et al, Electronics Letters, 20 , 489 (1984)] or a switching element [N.J. Thomas et al, Electronics Letters 20 , 838 (1984)] have been proposed. In these studies, the characteristics of the device have been studied, but there remain unsolved problems concerning reproducibility and stability, for example, a variance or change over time in the characteristics of the elements.

Most previous investigations have been carried out using LB films of fatty acids which can be handled with relative ease. However, these materials exhibit poor heat resistance and mechanical strength. We have investigated organic materials having better heat resistance and mechanical strength and have made a MIM element which exhibits good reproducibility and stability using LB films as the insulator, and we have successively prepared a thin uniform dye-based insulating film not found in the prior art. As a result of this work we have discovered a MIM element which can be switched and which exhibits an entirely novel memory function.

U.S. patent no. 4575822 discloses a data memory device comprising a substrate having a major surface, means for selectively forming perturbations in the surface and a probe which detects the presence of such perturbations. A tunnel electron current flows between the surface and the conductive probe, and the surface has a pair of layers, with the perturbations being established as accumulations of electrical charge at the interface between the layers which gives rise to a change in tunnel current as between charged and non-charged regions.

In the prior art, the above investigations have been made primarily about LB films of fatty acid which can be handled with relative ease. However, from organic materials which has been deemed to be inferior in heat resistance and mechanical strength, there are being developed heat-resistant and mechanically stronger organic materials one after another. We have studied intensively in order to prepare a MIM element excellent in reproducibility and stability by using an LB film by use of these materials as the insulator, and consequently could successfully prepare a thin and uniform dye insulating film not found in the prior art. Also, as a consequence, a MIM element capable of exhibiting the switching phenomenon having an entirely novel memory function has been discovered.

EP-A-0247219 discloses a data storage unit in which control circuitry is arranged to maintain an array of probes at a required distance from the recording medium.

JP 59178603 and Patent Abstracts of Japan, Vol. 9037, published 16 February 1985 discloses an information recording or reproducing device in which a multi-head is used to detect tunnel current flowing from a recording medium.

GB-A-2051456 discloses an information recording medium and system in which a recording electrode stylus is moved along the surface of a silicon nitride recording film whilst a recording voltage is applied between the stylus and the underlying substrate to the silicon dioxide film.

The invention is defined in any one of the claims below.

## BRIEF DESCRIPTION OF THE DRAWINGS

Fig. 1 illustrates diagramatically the current passage recording and reproducing device of the present invention.

Fig. 2 illustrates the characteristic curve of the current passed when 1 V is applied on the probe electrode when the distance between the probe electrode and the sample (recording layer) is varied.

Fig. 3 illustrates the pulse voltage waveform for recording.

Fig. 4 is a schematic illustration of MIM device.

Figs. 5 and 6 are characteristic graphs showing electrical characteristics obtained in the device shown in Fig. 4.

Fig. 7 is a schematic illustration of the device for forming built-up film.

Figs. 8A and 8B are schematic illustrations of a monomolecular film.

Figs. 9A to 9C are schematic illustrations of a built-up film.

Fig. 10A illustrates diagramatically the current passage recording and reproducing device of the present invention.

Fig. 10B is a perspective view of a substrate on which a plural number of probes were provided, and Fig. 10C is a side view thereof.

Fig. 10D illustrates diagramatically another current passage recording and reproducing device of the present invention.

Fig. 10E is a perspective view of a substrate on which a plural number of probes are provided, and Fig. 10F is a side view thereof.

Figs. 11A to 11C illustrate schematically the track and the recorded state of data in the recording medium.

Fig. 12A is a schematic illustration of the recording pattern used in the present invention, and

Fig. 12B is an enlarged view of the line pattern recorded within each lattice.

## DETAILED DESCRIPTION OF THE PREFERRED EMBODIMENTS

The recording medium used in the device of the present invention, by employing an organic built-up film with molecules having a group having $\pi$-electron level and a group having only $\sigma$-electron level in combination laminated on an electrode, can exhibit a non-linear current-voltage characteristic different from the prior art by applying current by use of a probe electrode vertical to the film surface.

Since most of organic materials generally exhibit insulating or semi-insulating properties, a remarkable diversity of applicable organic materials having a group having $\pi$-electron level are included in the recording medium.

As the structure of the dye having $\pi$-electron system suitable for the present invention, there may be included, for example, dyes having porphyrine skeleton such as phthalocyanine, tetraphenylporphyrine, etc.; azulene type dyes having squarilium group and croconic methine group as the bonding chain and cyanine-like dyes having two or more nitrogen-containing heterocyclic rings such as quinoline, benzothiazole, benzoxazole, etc. bonded through squarilium group and croconic methine group; or cyanine dyes, condensed polycyclic aromatic compounds such as anthracene

and pyrene, and chain compounds obtained by polymerization of aromatic ring and heterocyclic compounds; and polymers of diacetylene group; further derivatives of tetraquinodimethane or tetrathiafluvalene and analogues thereof and charge transfer complexes thereof; and further metal complex compounds such as ferrocene, tris-bipyridine ruthenium complexes, etc.

Concerning formation of an organic recording medium, although the vapor deposition method or the cluster ion beam method may be applicable, an LB method is extremely suitable among the known techniques because of controllability, easiness and reproducibility.

According to the LB method, a monomolecular film of an organic compound having a hydrophobic site and a hydrophilic site in one molecule or a built-up film thereof can be formed easily on a substrate, which has a thickness on the molecular order and a uniform and homogeneous organic ultra-thin film can be supplied stably over a large area.

The LB method is a method in which a monomolecular film or its built-up film is prepared by utilizing the phenomenon that, in a molecule with a structure having a hydrophilic site and a hydrophobic site in a molecule, when the balance of the both (amphiphilic balance) is brought to a proper value, the molecule will form a layer of monomolecule on the water surface with the hydrophilic group directed downward.

Examples of the group constituting the hydrophobic site may include various hydrophobic groups generally known widely such as saturated and unsaturated hydrocarbon groups, condensed polycyclic aromatic groups and chain polycyclic phenyl groups, etc. These may constitute the hydrophobic moiety each individually or as a combination of a plurality thereof. On the other hand, most representative as the constituent of the hydrophilic moiety are, for example, hydrophilic groups such as carboxyl group, ester group, acid amide group, imide group, hydroxyl group, further amino groups (primary, secondary, tertiary, and quaternary), etc. These also constitute the hydrophilic moiety of the above molecule each individually or as a combination of a plurality thereof.

A dye molecule having these hydrophobic group and hydrophilic group in a well-balanced state and having $\pi$-electron system having an appropriate size can form a monomolecular film on the water surface, and it can be an extremely suitable material for the present invention.

Specific examples may include the molecules as shown below.

[I] Croconic methine dyes:

1)

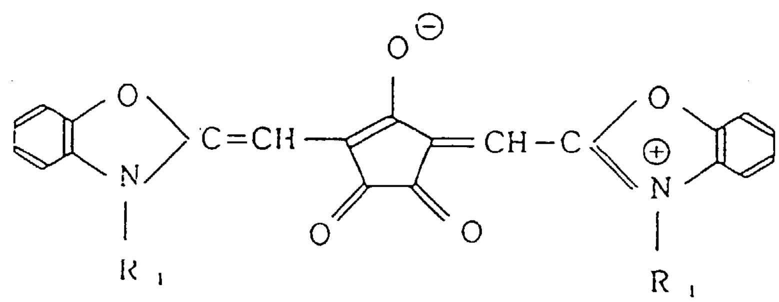

2)

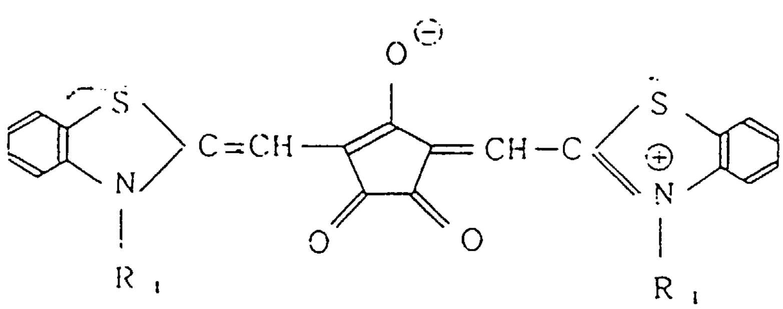

3)

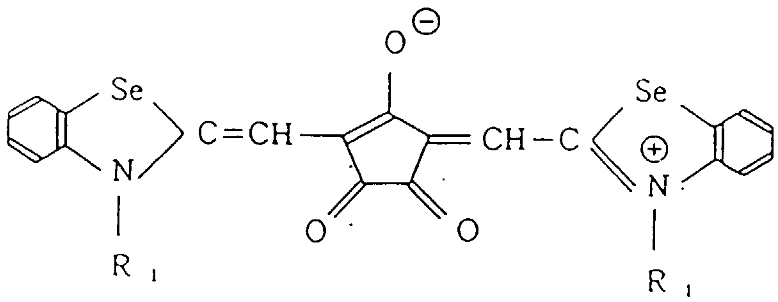

4)

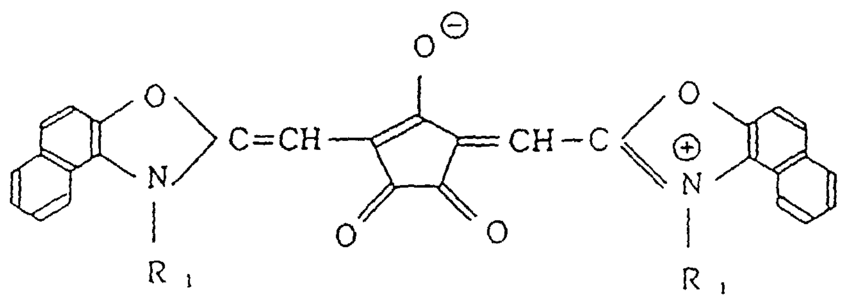

5)

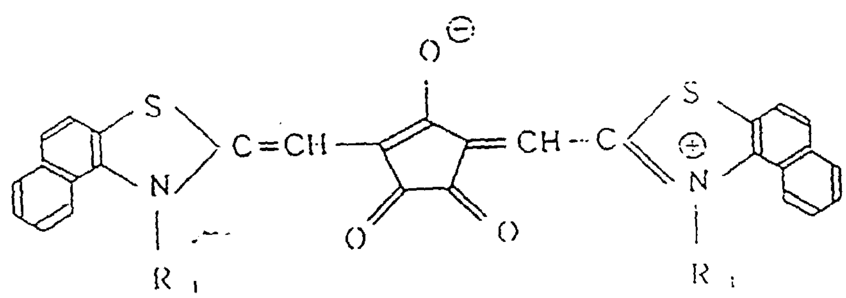

6)

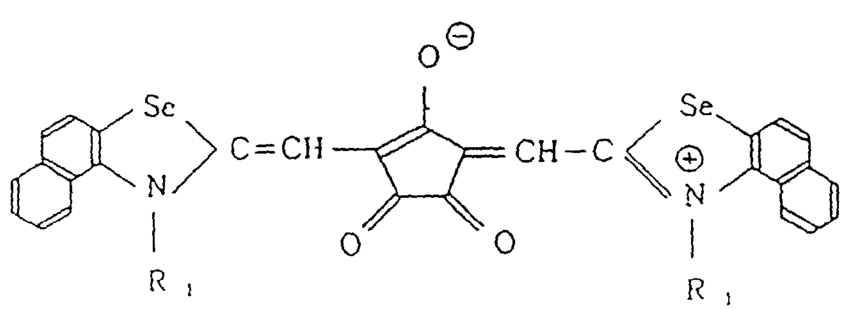

7)

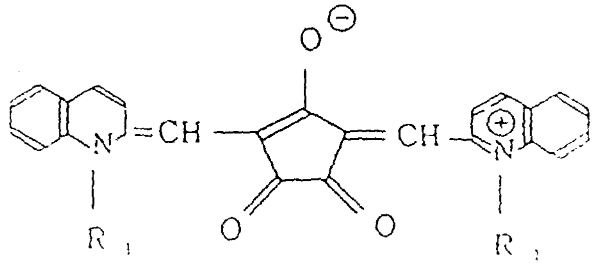

8)

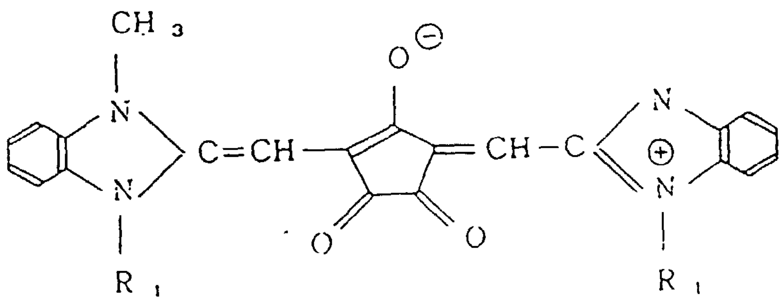

9)

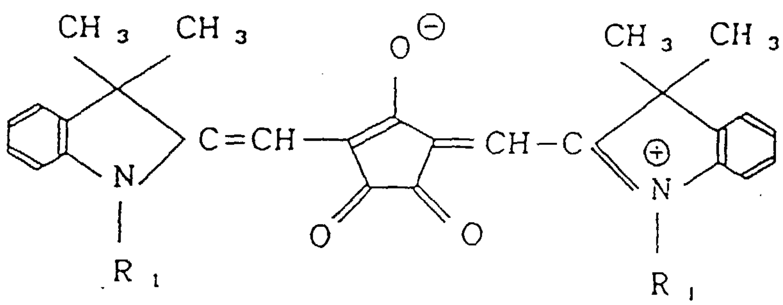

10)

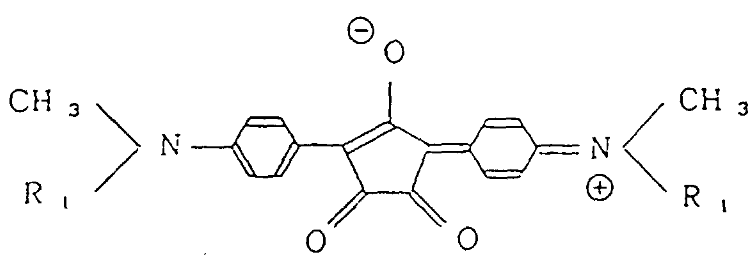

11)

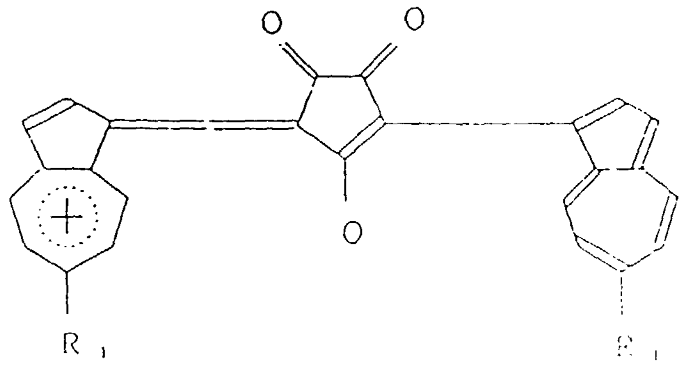

wherein $R_1$ corresponds to the group having σ-electron level as mentioned above, and may be preferably a long chain alkyl group introduced with the carbon number n being $5 \leq n \leq 30$ for making easier formation of the monomolecular film on the water surface. The compounds mentioned above as specific examples show only the basic structures, and various derivatives of these compounds are also suitable in the present invention, as a matter of course.

[II] Squarilium dyes:

Compounds mentioned in [I] in which the croconic methine groups are replaced with the squarilium group having the following structure:

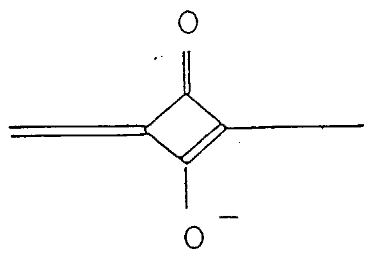

[III] Porphyrine type dye compounds:

1)

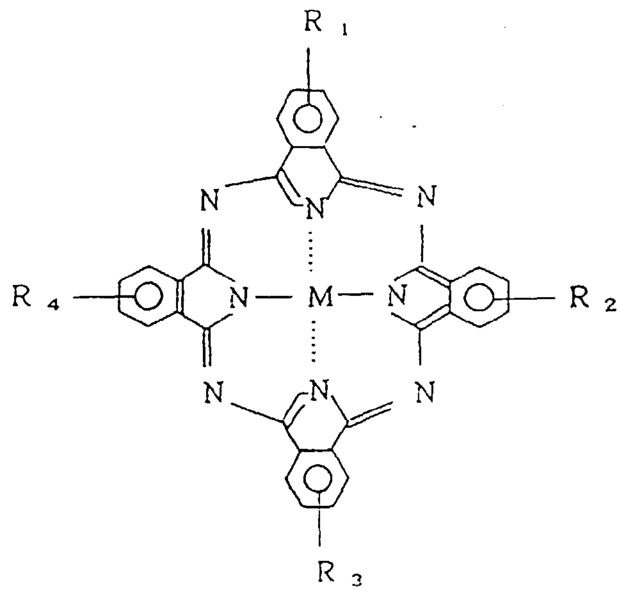

$R_1, R_2, R_3, R_4 = H,$

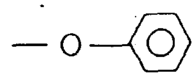

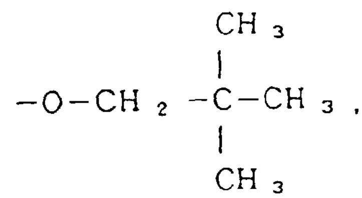

$-OC_5H_{11}$,

$-C(CH_3)_3$,

$-CH_2NHC_3H_7$

$M = H_2$, Cu, Ni, Al-Cl and rear earth metal ion

2)

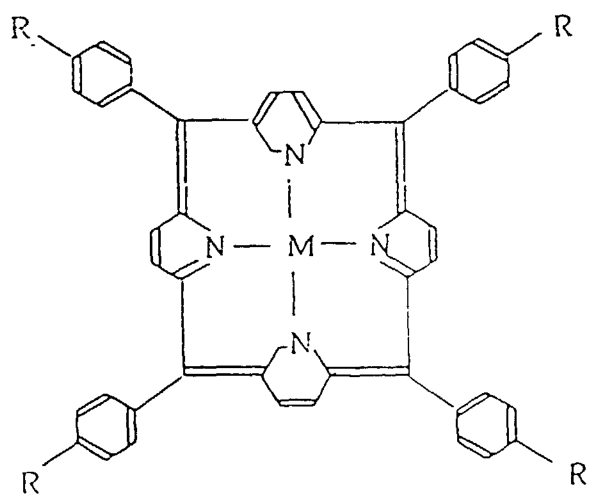

$R = OCH(COOH)C_nH_{2n+1}$

$5 \leq n \leq 25$

$M = H_2$, Cu, Ni, Zn, Al-C and rear earth metal ion

3)

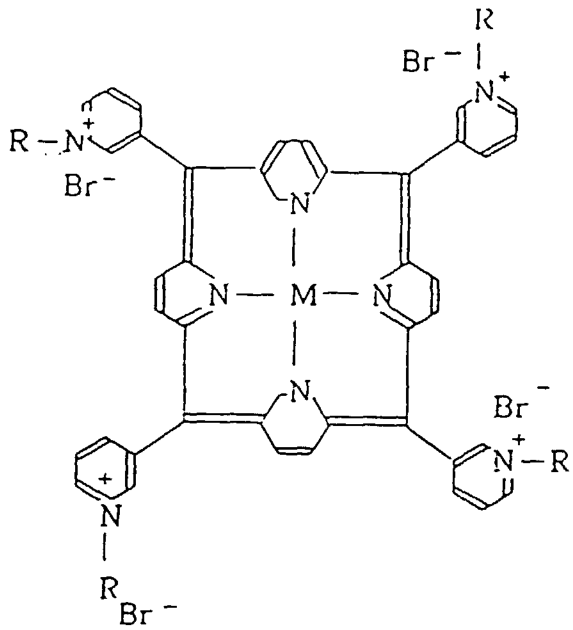

$R = C_nH_{2n+1}$  $5 \leq n \leq 25$

$M = H_2$, Cu, Ni, Zn, Al−Cl

and rear earth metal ion

R is introduced for making easier formation of the monomolecular film, and is not limited to the substituents mentioned here. On the other hand, $R_1$ - $R_4$ correspond to the group having σ-electron level as mentioned above.

[IV] Condensed polycyclic aromatic compounds:

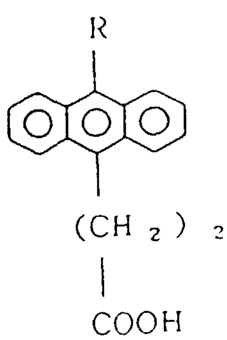

$R = C_4H_9 \sim C_{12}H_{25}$

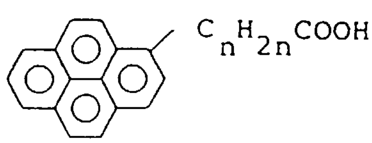

$\sigma \leq N \leq 20$

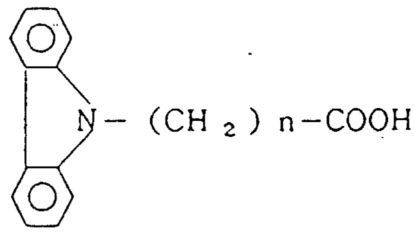

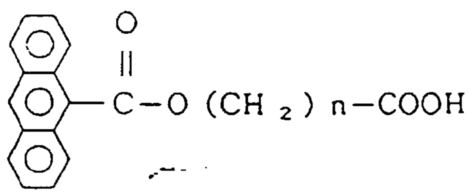

[V] Diacetylene compounds:

$$CH_3(CH_2)_n C{\equiv}C\text{-}C{\equiv}C(CH_2)_m X$$

$0 \leq n, m \leq 20$
(with proviso $n + m > 10$)
X is a hydrophilic group, and generally -COOH is used, but -OH, $-CONH_2$, etc. can be also used.

[VI] Others:

1)

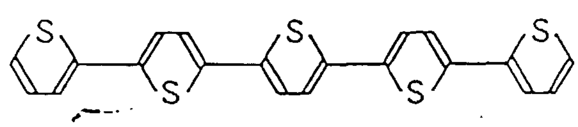

Quinquethienyl

2)

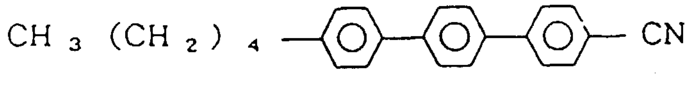

3)

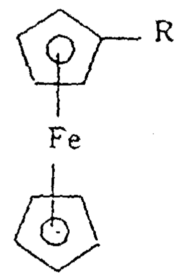

$R=CONHC_{18}H_{37}$,

$OCOC_{17}H_{35}$

4)

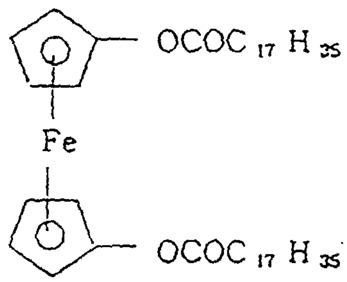

5)

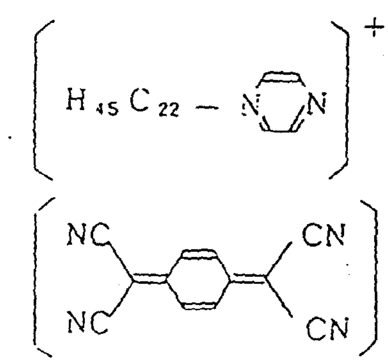

6)

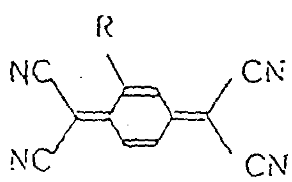

$R=C_{18}H_{37}$

Dye materials suitable for the LB method other than those as mentioned above are of course suitable. For example, biological materials of which study is becoming popular (e.g. bacteriorhodopsin or cytochrome c) or synthetic polypeptides (PBLG, etc.) and others may be also applicable.

Amphiphilic molecule can form a monomolecular film with the hydrophilic groups directed downward. The monomolecular layer on the water surface has the characteristics of the two-dimensional system. When the molecules are scattered sparsely, the following formula of the two-dimensional ideal gas is valid between the area per one molecule A and the surface pressure :

$$\pi A = kT,$$

thus becoming "gas film". Here, k is the Boltzmann's constant and T is an absolute temperature. When A is made sufficiently small, intermolecular interactions are strengthened, whereby the molecules become a "condensed film (or solid film)" which acts like a two-dimensional solid. The condensed film can be transferred, one layer by one layer, onto the surface of any desired body having various materials and shapes such as glass or resin. By use of this method, a monomolecular film or built-up films thereof can be prepared, and used as the recording layer.

As a specific preparation method, the following method may be employed.

A desired organic compound is dissolved in a solvent such as chloroform, benzene, acetonitrile, etc. Next, such solution is spread on an aqueous phase 81 by means of an appropriate device as shown in Fig. 7 in the accompanying drawings to form a layer or film 82 of the organic compound. Subsequently, a partitioning plate (or a float) 83 is provided to prevent too broad expansion of the spreading layer 82 through free diffusion on the aqueous phase 81, whereby the spreading area of the spreading film 82 is restricted to control the gathered state of the film substance and obtain a surface pressure $\pi$ in proportion to the gathered state. By moving this partitioning plate 83, the gathered state of the film substance can be controlled by reducing the spreading area, whereby the surface pressure can be gradually elevated to be set at a surface pressure suitable for preparation of the film. With the surface pressure kept constant, by moving vertically a clean substrate 84 gently, a monomolecular film of an organic compound is transferred onto the substrate 84. Such monomolecular film 91 is a film having molecules orderly arranged as shown in Fig. 8A or 8B.

The monomolecular film 91 can be thus produced, and a built-up film with desired built-up number can be formed by repeating the above operation. For transfer of the monomolecular film 91 onto the substrate 84, other than the above vertical dipping method, such methods as the horizontal lifting method, the rotating cylinder method, etc., may be employed. The horizontal lifting method is a method in which transfer is effected with the substrate being contacted horizontally on the water surface, and the rotating cylinder method is a method in which the monomolecular layer is transferred onto the substrate surface by rotating a cylindrical substrate on the water surface.

In the vertical dipping method as described above, when a substrate having a hydrophilic surface is withdrawn in the direction transversing the water surface, a monomolecular film 91 of the organic compound with the hydrophilic sites 92 of the organic compound directed toward the substrate 84 side is formed on the substrate 84 (Fig. 8B). When the substrate 84 is moved vertically, monomolecular films 91 are laminated one layer by one layer in the respective steps to form a built-up film 101. Since the direction of the film forming molecules in the withdrawing step becomes opposite to that of the dipping step, there is formed a Y type film according to this method in which the hydrophobic sites 93a and 93b of the organic compound are faced to each other between the respective layers (Fig. 9A). In contrast, in the horizontal lifting method, the monomolecular film 91 is formed on the substrate 84 with the hydrophobic site 93 of the organic compound faced toward the substrate 84 side (Fig. 8A). According to this method, even when the monomolecular film 91 may be built up, there is no change in direction of the film forming molecules, but there is formed an X type film in which the hydrophobic sites 93a and 93b are faced toward the substrate side in all of the layers (Fig. 9B). On the contrary, a built-up film 101 in which the hydrophilic sites 92a and 92b are faced toward the substrate 84 side is called a Z type film (Fig. 9C).

The method for transferring the monomolecular film 91 onto a substrate 84 is not limited to the above methods, but it is also possible to employ a method in which a substrate is extruded into an aqueous phase from a roll, when employing a large area substrate. The direction of the hydrophilic groups and the hydrophobic groups toward the substrate as described above are given as a general rule, and it can also be modified by the surface treatment of the substrate, etc.

As described above, a potential barrier layer comprising the monomolecular film 91 of an organic compound or its built-up film is formed on the substrate 84.

The substrate 84 for supporting the thin film comprising a lamination of the inorganic material and organic material may be any of metal, glass, ceramics, plastic materials, etc., and further a biological material with remarkably lower heat resistance can also be used.

The substrate 84 as described above may be in any desired shape, preferably in a flat plate, which is not limitative of the present invention at all. This is because the above film forming method has such advantage that the film can be formed exactly in accordance with the shape of the substrate surface independently of the shape of the substrate surface.

In another specific example, it is possible to utilize the phenomenon that tunnel current flows when the probe of a metal and an electroconductive substance are brought close to each other to a distance of about 1 nm with application

of a voltage therebetween. This tunnel current depends on the work function on the surface, and therefore information regarding various surface electron states can be read.

The method by use of tunnel current has a number of advantages such that it requires no vacuum condition, is applicable to both single crystalline and amorphous materials, has high resolving power, and yet reproduction at low power is possible without giving damage by the current.

Further, since tunnel current is of a magnitude on the order of about nA, the recording medium may be one having a conductivity of $10^{-10}$ (ohm.cm)$^{-1}$ or higher, preferably $10^{-8}$ (ohm.cm)$^{-1}$ or higher.

As the recording medium to be used in the present invention, materials exhibiting the memory switching phenomenon in current-voltage characteristic can be utilized. For example, there may be included (1) amorphous semiconductors such as oxide glass, borate glass or chalcogenide glass containing Se, Te, As compounded with the element of the group III, IV, V or VI of the periodic table, etc. They are intrinsic semiconductors having an optical band gap Eg of 0.6 to 1.4 eV or an electrical activation energy $\Delta E$ of approximately 0.7 to 1.6 eV. Specific examples of chalcogenide glass may include A-Se-Te type, Ge-As-Se type, Si-Ge-As-Te type, for example, $Si_{16}Ge_{14}As_5Te_{65}$ (the subscripts show atomic%), or Ge-Te-X type, Si-Te-X type (X=represents small amount of group V, and VI elements), for example $Ge_{15}Te_{81}Sb_2S_2$.

Further, a chalcogenide glass of Ge-Sb-Se type may be also used.

In the amorphous semiconductor layer comprising the above compound deposited on the electrode, by applying a voltage in the direction vertical to the film surface by use of a probe electrode, the electric memory effect of the medium can be exhibited.

As the method for depositing such material, a method according to the thin-film-forming technique known in the art can be used. For example, suitable film-forming methods may include the vacuum vapor deposition method, the cluster ion beam method, etc. Generally speaking, the electric memory effect of such material is observed at a film thickness of several µm or less, and concerning recording resolving power as the recording medium, the thickness may be preferably thinner. However, with respect to uniformity and recording characteristic, a film thickness is preferably 100 Å to 1 µm more preferably a thickness of 1000 Å or less.

Further, there may be included (2) organic semiconductor layers having deposited a salt of an electron accepting compound such as tetraquinodimethane (TCNQ), TCNQ derivatives, for example, tetrafluorotetracyanoquinodimethane ($TCNQF_4$), tetracyanoethylene (TCNE) and tetracyanonaphthoquinodimethane (TNAP), etc. with a metal having relatively lower reduction potential such as copper or silver on the electrode.

As the method for forming such organic semiconductor layer, there may be employed the method in which the above electron accepting compound is vacuum vapor deposited on the electrode of copper or silver.

The electric memory effect of such organic semiconductor is observed at a film thickness of several ten µm or less, but a film thickness of 100 Å to 1 µm is preferred with respect to film forming property and uniformity.

Further, there may be employed (3) recording medium using amorphous silicon as the material. For example, it is a recording medium having a layer constitution of metal/a-Si ($p^+$ layer/n layer/i layer) or metal/a-Si ($n^+$ layer/p layer/i layer), and the respective layers of a-Si can be deposited satisfactorily according to the methods known in the art. The glow discharge method (GD) may be preferably employed. The film thickness of a-Si may be preferably 2000 Å to 8000 Å for the n layer, about 1000 Å for the $p^+$ layer, with the total film thickness being preferably about 0.5 µm to 1 µm.

On the other hand, the electrode material may be one having high conductivity, including a large number of materials, typically metals such as Au, Pt, Ag, Pd, Al, In, Sn, Pb, W, etc. and alloys of these, further graphite or silicide, and further electroconductive oxides such as ITO. The method for forming electrodes by use of such material may be sufficiently the known thin film forming technique. However, as the electrode material to be formed directly on the substrate, it is preferable to use an electroconductive material of which the surface will not form an insulating oxide film during formation of an LB film, for example a noble metal or an oxide conductor such as ITO.

The metal electrode of the recording medium is required if the recording layer is insulating, but no such metal electrode is required if said recording layer exhibits semiconductive properties of MΩ or less. Thus, the recording layer itself can be used as the counter-electrode of the probe electrode.

Also, the tip of the probe electrode is required to be pointed so far as possible in order to enhance resolving power of recording/reproduction/erasing. A platinum with a thickness of 1 mm in diameter with a tip mechanically grounded to a cone of 90°, which is subjected to evaporation of the surface atoms by applying an electrical field in ultra-high vacuum, is employed, but the shape of the probe and the treating method are not limited thereto.

By use of the materials and the method as described above, a device with MIM structure as shown in Fig. 4 was prepared, whereby a memory switching device exhibiting the current-voltage characteristics as shown in Fig. 5 and Fig. 6 was obtained, and the two states (ON state and OFF state) were already found to have respective memory characteristics. These memory switching characteristics appear at the layer thickness of several Å to several 1000 Å, but the recording medium used with the probe electrode should preferably have a layer thickness in the range of several Å to 500 Å, most preferably a layer thickness of 10 Å to 200 Å.

In Fig. 4, 84 represents a substrate, 41 an Au electrode, 42 an Al electrode and 43 a built-up monomolecular film

as described above.

Fig. 1 is a block constituting diagram showing the recording device of the present invention. In Fig. 1, 105 is a probe current amplifier, 106 a servo circuit for controlling the fine mechanism 107 by use of a piezoelectric element so that the probe current may become constant. 108 is a power source for applying a pulse voltage for recording/erasing between the probe electrode 102 and the electrode 103.

When a pulse voltage is applied, the probe current will be abruptly changed and therefore the servo circuit 106 controls the HOLD circuit to be set ON so that the output voltage may be kept constant during that period.

109 is an XY scanning driving circuit for movement control of the probe electrode in the XY direction. 110 and 111 are used for coarse control of the distance between the probe electrode 102 and the recording medium 1 so that a probe current of about $10^{-9}$ A may be obtained. These respective instruments are under the central control by means of a microcomputer 112. Also, 113 has a display instrument.

The mechanical performances in the movement control by use of a piezoelectric element are shown below.

| | |
|---|---|
| Fine control range in Z direction: | 0.1 nm - 1 µm |
| Coarse control range in Z direction: | 10 nm - 10 mm |
| Scanning range in XY direction: | 0.1 nm - 1 µm |
| Measurement, control tolerable error: | <0.1 nm. |

Fig. 10A is a block constituting diagram showing another recording device of the present invention. In Fig. 10A, 1005 is a probe current amplifier, and 1006 is a servo circuit for controlling the fine mechanism 1007 by use of a piezoelectric element so that the probe current may become constant. 1008 is a power source for applying a pulse voltage for recording/erasing between the probe electrodes 1002a, b, c and the electrode 1003.

When a pulse voltage is applied, the probe current will be abruptly changed, and therefore the servo circuit 1006 controls the HOLD circuit to be set ON so that the output voltage may be kept constant during that period.

1009 is an XY scanning driving circuit for movement control of the probe electrodes 1001a, b, c in the XY direction. 1010 and 1011 are used for coarse control of the distance between the probe electrodes 1002a, b, c and the recording medium 1 so that a probe current of about 10-9 A may be previously obtained. These respective instruments are all under central control by means of a microcomputer 1012. 1013 represents a display instrument, and 1015 a wiring.

Also, the mechanical performances in the movement control by use of a piezoelectric element are shown below.

| | |
|---|---|
| Fine control range in Z direction: | 0.1 nm - 1 µm |
| Coarse control range in Z direction: | 10 nm - 10 mm |
| Scanning range in XY direction: | 0.1 nm - 1 µm |
| Measurement, control tolerable error: | <0.1 nm. |

Fig. 10D is another preferable example of the present invention, showing a block diagram of the device having a large number of probe electrodes 1002 provided, Fig. 10E showing a perspective view of an embodiment in which a number of probe electrodes 1002 are provided on the $SiO_2$ substrate and Fig. 10F showing a side view thereof.

The probe electrodes shown in Figs. 10D - 10E can be prepared in a large number by implanting silicon onto the $SiO_2$ plate by focus-ion beam and permitting tungsten to grow selectively on the silicon. In the device shown in Fig. 10D, in place of the servo circuit 1006 used in the device shown in Fig. 10A, an A/D transducer 1016 for converting analog signals obtained to digital signals can be used.

In another example, a high density record written by use of an energy beam such as a particle beam (an electron beam, or an ion beam) or a higher energy electromagnetic wave ray such as an X-ray, etc. and visible light, an UV-ray or a laser beam, etc. can be electrically reproduced by use of a probe electrode. As a reproducing device, the device shown in Fig. 1 and Fig. 10 can be used. In this case, the recording medium 1 to be used is constituted of a substrate electrode 103 and a recording layer 101 formed thereon.

As the recording layer 101 mentioned above, an inorganic or organic semiconductive substance can be used.

For example, inorganic semiconductors may include semiconductive substances containing the element selected from the group IVB of the long period type periodic table (C, Si, Ge), semiconductive substances containing the element selected from the group IIIB (Ga) and the element selected from the group VB (As, P) or semiconductive substances containing the element selected from the group IIB (Zn, Cd) and the element selected from the group VIB (O, S, Se). Specifically, there may be employed a large number of materials, including typically semiconductors such as Si (single crystalline, polysilicon, amorphous), Ge, GaAs, GaP, InAs, InP or CdS, CdSe, ZnO, ZnS, etc. On the other hand, organic semiconductors may include a large number of organic semiconductors, for example, aromatic polycyclic compounds such as phthalocyanine and derivatives thereof, pyrene, perylene, etc. and derivatives thereof; polymeric compounds having conjugated $\pi$ bond such as polyacetylene, polydiacetylene derivatives, etc.; further electrolytic polymerized films such as of pyrrole, thiophene, etc.; or polyvinyl carbazole, tetraquinodimethane, docosylpyridinium, tetraquinodimethane charge transfer complexes, etc.

These semiconductor substances can be formed in conventional manner into thin films. For example, for film formation of an inorganic semiconductor, there can be employed the vacuum vapor deposition method, the sputtering method, the glow discharge method, etc., while for film formation of an organic semiconductor, the vacuum vapor deposition method such as the cluster ion beam method or the electrolytic polymerization method may be available. Also, film formation can be effected by coating of a coating liquid having a semiconductive substance dispersed in an appropriate resin (e.g. polystyrene, polyacrylonitrile, polycarbonate, polyester, etc. according to a conventional method (roll coating, dip coating, etc.).

Also, in another specific example, during formation of the recording layer 101, a Langmuir-Blodgett method (an LB method) proposed by Langmuir et al as described above is applicable.

As the general structure of molecule to be used, the molecules as shown below may be included.

(1) Molecules with the site bearing desired function, namely the functional moiety (e.g. $\pi$ electron system) having at the same time strong hydrophilic property (or strong hydrophobic property) in combination, for example, copper phthalocyanine, pyrene, triphenylmethane, etc., or molecules with such functional moiety exhibiting polymerizability, for example, diacetylene derivatives, polyimide, etc.

(2) Molecules with the functional moiety having not particularly hydrophilic property or hydrophobic property and having hydrophilic sites and hydrophobic sites formed within the molecule by introducing hydrophilic groups, and hydrophobic groups as described above, including, for example:

a) those having functional moieties arranged on the side of hydrophilic sites, for example, long chain alkyl-substituted melocyanine dyes having photo-conductivity, etc.;

b) those having functional moieties arranged on the side of hydrophobic sites, for example, pyrene having long chain alkylcarboxylic acid bonded thereto;

c) those having functional moieties arranged around the center, namely in the middle of the hydrophobic sites and the hydrophilic sites, for example, anthracene derivatives, diazo dyes, etc.

d) those having no functional moiety, but constituting of only hydrophobic sites and hydrophilic sites, for example, stearic acid, arachidic acid, etc. substituted with long chain saturated fatty acid.

Other materials suitable for the LB method than those mentioned above are of course suitable. For example, biological materials of which studies have been comprehensively made in recent years (e.g. polypeptides such as bacteriorhodopsin or cytochrome c) or synthetic polypeptides (PBLG, etc.) may be also applicable.

A potential barrier layer comprising a monomolecular film of such organic compound or its built-up film is formed on the substrate.

The substrate for supporting the thin film comprising a laminate of inorganic and organic materials as described above may be any of metal, glass, ceramics, plastic materials, etc., and further a biological material with remarkably lower heat resistance can be also used.

The substrate as mentioned above may have any desired shape, preferably a flat plate shape, but the shape is not limited to a flat plate at all. Thus, in the above film forming method, irrespectively of whether the substrate may have any surface shape, there is the advantage that the film can be formed exactly the same as its shape.

The recording layer 101 can be recorded with various energy beams as described below, and the recorded image can be reproduced by means of the reproducing means as described above. In the following, specific examples of the recording method are shown.

1) A method in which a high energy particle beam such as electron beam, ion beam is irradiated on the LB film as described above. By irradiation of a high energy particle beam onto an LB film, there occurs physical change in the film structure of the LB film itself, whereby the change in the film thickness of the LB film is caused to occur.

2) A method in which an ion beam, visible light or an UV-ray is irradiated onto the semiconductor thin film, whereby the change in electroconductivity is caused to occur at the irradiated portion.

3) A method in which an electron beam is irradiated onto a thin film of a metal phthalocyanine (copper phthalocyanine, nickel phthalocyanine, lead phthalocyanine, etc.), thereby causing the oxidation-reduction reaction of the metal phthalocynine at the irradiated portion to occur, to cause change in the film structure.

4) A method in which change in electron state accompanied with polymerization by electron beam, X-ray or UV-ray irradiation is caused to occur. The monomers to be used in this case may include the following:

ⓐ $R_1\{CH_2\}_nX\text{-}R_2 \qquad 10 \leqq n \leqq 25$

X=-COO-, -CONH-, -OCO-
$R_1$ =-$CH_3$, -$CH=CH_2$
$R_2$ =-H, -$CH=CH_2$, -$C(CH_3)=CH_2$, -$CH_2CH=CH_2$

(with proviso that $R_2$ cannot be -H where $R_1$ is -$CH_3$)

$$\text{ⓑ}\ H\text{-}(CH_2)_n\ C\equiv CC\text{-}C\equiv C\text{-}(CH_2)_m\ X\text{-}R_2 \qquad 0\leq m,\ n,\ 10\leq m+n\leq 25$$

X=-COO, -CONH-, -OCO-
$R_2$ = -H, -$CH=CH_2$, -$C(CH_3)$ =$CH_2$, -$CH_2$ $CH=CH_2$

5) The method in which direct recording is effected through change in conformation or configuration of the compound by irradiation of visible light or UV-ray. For example, there may be employed:

a) spiropyrane, fulgide or azobenzene derivatives having photochromic property;
b) dyes in which the associated state is changed, for example, melocyanine compounds, cyanine compound, or squarilium and croconic methine compounds, particularly azulene type compounds.

The thin film structure change of an LB film, etc. as mentioned here may sometimes occur alone, but in many cases some effects will generally occur associatedly.

As the electrode for laminating a thin film such as an LB film, etc. as described above, all conductors having conductivity of 10-6 (ohm.cm)-1 or higher can be used. More specifically, with the use of a metal plate such as Au, Pt, Pd, Ag, Al, or a glass, ceramics, plastic materials having these metals vapor deposited thereon, or semiconductors such as Si (crystalline, amorphous) as the substrate, a thin film such as LB film can be laminated thereon and used as the recording medium.

Example 1

A recording/reproducing device shown in Fig. 1 was employed. As the probe electrode 102, a probe electrode made of platinum was used. This probe electrode 102 is used for controlling the distance (Z) from the surface of the recording layer 101, and its distance (Z) is finely controlled by a piezoelectric element so that the current may be controlled to be constant. Further, the fine control mechanism 107 is designed so that fine movement control may be possible also in the plane (X,Y) direction. However, all of these are known techniques. Also, the probe electrode 102 can be used for direct recording, reproduction and erasing. The recording medium is placed on the XY stage 114 with high precision and can be moved to any desired position.

Next, the experiments of recording, reproduction and erasing by use of an LB film (8 layers) of squarilium-bis-6-octylazulene (hereinafter abbreviated as SOAZ) formed on the electrode 103 formed of Au are described in detail.

A recording medium 1 having a recording layer with 8 built-up SOAZ layers was placed on the XY stage 114, and first the position of the probe electrode 102 was determined and fixed firmly. Between the Au electrode (the ground side) 103 and the probe electrode 102, a voltage of -3.0 V was applied, and the distance (Z) between the probe electrode 102 and the recording layer 101 surface was controlled while monitoring the current. Thereafter, the distance from the probe electrode 102 to the surface of the recording layer 101 was changed by controlling the fine control mechanism 107, whereby the current characteristics as shown in Fig. 2 were obtained. It is required that the probe voltage should be controlled so that the probe current Ip for controlling the distance from the probe electrode 102 to the surface of the recording layer 101 may be $10^{-7}A \geq Ip \geq 10^{-12}A$, preferably $10^{-8}A \geq Ip \geq 10^{-10}A$.

First, the controlled current was set to be current value of the a region in Fig. 2 ($10^{-7}$A) - (Condition of probe grounding). When the current value was measured by applying reading voltage of 1.5 V which was a voltage not exceeding the threshold voltage which gives rise to electric memory effect between the probe electrode 102 and the Au electrode 103, OFF state was exhibited at µA or less. Next, after a triangular pulse voltage having the waveform shown in Fig. 3 which is an voltage of or higher than the threshold voltage of Vth ON which gives rise to ON state, the current was again measured by applying a voltage of 1.5 V between the electrodes, whereby a current of about 0.7 mA was found to flow, thus indicating the ON state.

Next, after a triangular pulse voltage with a peak voltage of 5 V and a pulse width of 1 µS which is a voltage of or higher than the threshold voltage Vth OFF at which the change occurs from the ON state to the OFF state, 1.5 V was again applied, whereby it was confirmed that the current value at this time was returned to OFF state at µA or less.

Next, with the probe current Ip being set at $10^{-9}$ A (b region in Fig. 2), the distance Z between the probe electrode

102 and the surface of the recording layer 101 was controlled.

While moving the XY stage 114 at a constant interval (1 μ), a pulse voltage (15 Vmax, 1 μS) of ON or higher than the threshold value Vth ON having the same waveform as in Fig. 3 was applied to write the ON state. Then, by applying a probe voltage of 1.5 V for reading between the probe electrode 102 and the counter-electrode 103, the change in current quantity passing between the ON state region and OFF state region can be directly read or through the servo circuit 106. In this Example, it was confirmed that the probe current passing through the ON state region was found to be changed by 3 digits or more as compared with before recording (or the OFF state region).

Further, as the result of tracing again the recording position by setting the probe voltage at 10 V of the threshold voltage Vth OFF or higher, it was also confirmed that all the recorded state was erased to be transited to the OFF state.

Next, by use of the fine control mechanism 107, the resolving power was measured by writing stripes of 1 μ length with various pitches between 0.001 μ and 0.1 μ, and it was found to be 0.01 μ or less.

The SOAZ-LB film used in the above experiments was prepared as described below.

After an optically polished glass substrate (substrate 104) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 103).

Next, a chloroform solution containing SOAZ dissolved at a concentration of 0.2 mg/ml was spread over an aqueous phase of 20°C to form a monomolecular film on the water surface. After evaporation of the solvent, the surface pressure of such monomolecular film was enhanced to 20 mN/m, and further while this was maintained to be constant, the above electrode substrate was dipped gently at a speed of 5 mm/min. So as to transverse across the water surface, and further withdrawn to have two layers of Y-form monomolecular film built up. By repeating appropriate times of this operation, 6 kinds of 2, 4, 8, 12, 20 and 30 layers of built-up films were formed on the above substrate and used for recording and reproducing experiments. The evaluation results are shown in Table 1.

Evaluation was performed overall from the recording and erasing characteristics after applying the pulse and the erasing voltage, further the ratio of the current value under the recording state to that of the erased state (ON/OFF) and the resolving ability, and those with particularly good results were rated as A, those with excellent results as B, and those with relatively somewhat lower results as compared with others as C.

## Example 2

The experiments were conducted in the same manner as in Example 1 except for using t-butyl derivative of luthetium diphthalocyanine [$LuH(Pc)_2$] in place of the SOAZ recording medium used in Example 1. The results are summarized in Table 1. It was found that writing and reading of record could be done at sufficient S/N ratio as in the case of SOAZ.

The built-up conditions of t-butyl derivative of $LuH(Pc)_2$ are shown below.

Solvent: chloroform/trimethylbenzene/acetone (1/1/2)
Concentration: 0.5 mg/ml
Aqueous phase: pure water, water temperature 20°C
Surface pressure: 20 mN/m, vertical moving speed of substrate 3mm/min.

## Examples 3 - 9

Recording media were prepared by use of the substrate electrode materials and the dye compounds shown in Table 2, and the same experiments as in Examples 1 and 2 were conducted with the controlled current value of the probe current set at $10^{-9}$ A to obtain the results shown in Table 2. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 1

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| S O A Z | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| $LuH(Pc)_2$ | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 2

| Example | Substrate Electrode | Dye Compound | Recording Reproducibility | Resolving Power |
|---|---|---|---|---|
| 3 | Pt (100Å) | SOAZ | ○ | Not more than 0.01 μ |
| 5 | Cr/Au (50Å/400Å) | Tetraphenylporphyrine derivative * | ○ | Not more than 0.05 μ |
| 4 | ITO (1000Å) | SOAZ | ○ | Not more than 0.03 μ |
| 6 | Cr/Au (50Å/400Å) | Anthracene derivative ** | ○ | Not more than 0.1 μ |
| 7 | Cr/Au (50Å/400Å) | Docosylpyradinium-tetracyanoquinodimethane | ○ | Not more than 0.01 μ |
| 8 | Cr/Au (50Å/400Å) | Pentacosa-10,12-diynoic acid | ○ | Not more than 0.01 μ |
| 9 | Cr/Ar (50Å/400Å) | Bacteriorhodopsin *** | ○ | Not more than 0.05 μ |

*

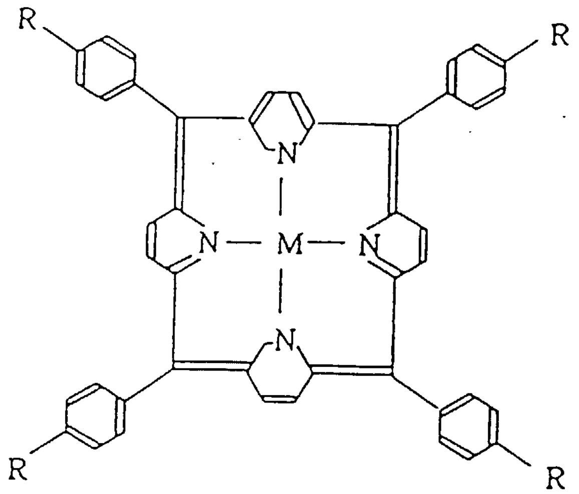

R=OCH (COOH) $C_{20}H_{41}$

**

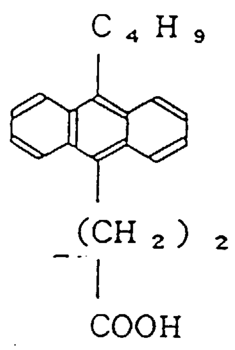

*** violet film extracted from a cultured product obtained by culturing a highly halophilic bacterium according to the known method.

In the Examples as described above, the LB method was employed for formation of the dye recording layer, but any film forming method can be used without limitation to the LB method, provided that an extremely thin film can be prepared, and specifically the vacuum vapor deposition method such as MBE, CVD method, etc. may be included.

Applicable materials are not limited to only organic compounds, but inorganic materials such as chalcogenide compounds, etc. are also applicable.

Further, it is also possible to combine the electrode and the recording layer by use of a semiconductor as the electrode on the recording medium side.

Any particular substrate material, shape or surface structure can be used.

Example 10

A recording/reproducing device shown in and described with reference to Fig. 1 was employed. As the probe electrode 102, a probe electrode made of platinum was used and recording, reproduction and erasure experiments were carried out using as the recording layer 101 a chalcogenide glass represented by the composition formula $Si_{16}Ge_{14}As_5Te_{65}$ (the subscripts correspond to atomic%) (film thickness 2000 Å) formed on the electrode 103 formed of Au.

A recording medium 1 having a recording layer 101 of the above chalcogenide glass having a thickness of 2000

Å was placed on the XY stage 114. Between the Au electrode (the ground side) 103 and the probe electrode 102, a voltage of 1.0 V was applied, and the distance (Z) between the probe electrode 102 and the recording layer 101 surface was controlled while monitoring the current. Thereafter, the fine control mechanism 107 was controlled so that the probe current Ip became $10^{-9}$ A.

It is required that the probe voltage should be controlled so that the probe current Ip for controlling the distance from the probe electrode 102 to the surface of the recording layer 101 may be $10^{-7}A \geq Ip \geq 10^{-12}A$, preferably $10^{-8}A \geq Ip \geq 10^{-10}A$.

While moving the XY stage 114 at a constant interval (1 μ), a rectangular pulse voltage (20 Vmax, 0.1 μS) of or higher than the threshold value Vth ON was applied to give rise to a low resistance state (ON state). Then, by applying a probe voltage or 1.0 V for reading between the probe electrode 102 and the counter-electrode 103, the change in current quantity passing between the ON state region and OFF state region can be directly read or through the servo circuit 106. In this Example, it was confirmed that the probe current passing through the ON state region was found to be changed by 2 digits or more as compared with before recording (or the OFF state region).

Further, as the result of tracing again the recording position while applying a rectangular pulse voltage (50 Vmax, 10 μS) of or higher than the threshold voltage Vth OFF on the probe electrode, it was also confirmed that all the recorded state was erased and returned to the OFF state. Erasing of recording is also possible by the optical method.

Next, by use of the fine control mechanism 107, the resolving power was measured by writing stripes of 1 μ length with various pitches between 0.01 μ and 1 μ, and it was found to be 0.1 μ or less.

The chalcogenide glass used in the above experiments was prepared as described below.

After an optically polished glass substrate (substrate 104) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 103).

Next, an amorphous semiconductor represented by the atomic composition ratio of $Si_{16}Ge_{14}As_5Te_{65}$ was vapor deposited to a film thickness of 2000 Å by the vacuum vapor deposition method known in the art and used as the recording medium.

Example 11

The same experiment as in Example 10 was conducted except for using $Ge_{15}Te_{81}Sb_2S_2$ in place of $Si_{16}Ge_{14}As_5Te_{65}$ used in Example 10. It was found that writing and reading of record could be done at sufficient S/N ratio similarly as in Example 1.

Example 12

The same recording and reproducing experiment as in Example 1, except for using $CuTCNQF_4$ in place of the chalcogenide glass recording medium used in Examples 10 and 11. A rectangular pulse of 2 Vmax, 10 ns was used as the application voltage for recording, and the application voltage for control of the probe current was made 0.1 V. As the result, recording and reproduction could be done at sufficient S/N ratio similarly as in Example 1. The method for preparation of the $CuTCNQF_4$ recording medium is described below.

After an optically polished glass substrate was washed, Cu was deposited to 2000 Å according to the vacuum vapor deposition method to provide an electrode. Further, Cu and $TCNQF_4$ were co-deposited by the vacuum vapor deposition method to deposite a $CuTCNQF_4$ layer to 2000 Å (substrate temperature; room temperature). At this time, heating was effected by passing current value previously set so that the vapor deposition speed may become about Cu, 5Å/s; $TCNQF_4$, 20 Å/s. As the result, it was confirmed that a blue film by formation of $CuTCNQF_4$ was deposited.

Example 13

After an electrode was formed by vacuum vapor deposition of Cr to a film thickness of 500 Å on an optically polished glass substrate, an amorphous silicon film of $p^+$ type with a thickness of 1000 Å was formed. The preparation conditions at that time were as follows:

| | |
|---|---|
| Introduced gases: | $B_2H_6/SiH_4$ ($N_{BH}/N_{SiH}=10^{-1}$) (diluted with $H_2$ gas to 0.025 mol%) |
| rf power: | 0.01 $W/cm^2$ |
| Pressure: | 0.5 torr |
| Substrate temperature: | 300 °C |
| Deposition speed: | 30 Å/min. |

Next, after the superfluous starting gases were discharged, new starting gases were fed to deposite a n-type amorphous

silicon to 5000 Å. The preparation conditions were as follows.

| | |
|---|---|
| Introduced gases: | $PH_3/SiH_4$ ($N_{PH}/N_{SiH}=5\times10^{-3}$) (diluted with $H_2$ gas to 0.05 mol%) |
| rf power: | 0.01 $W/cm^2$ |
| Pressure: | 0.5 torr |
| Substrate temperature: | 300 °C |
| Deposition speed: | 40 Å/min. |

Also, after the starting gases were discharged, $SiH_4$ diluted with $H_2$ gas to 0.05 mol% was introduced into the chamber, and an i-phase amorphous silicon was deposited to 1000 Å under otherwise the same conditions.

By use of the recording medium as prepared above, the same recording and reproduction were effected in the same manner as In Example 10. As the result, recording and reproduction could be done with sufficient S/N ratio exhibited. For recording, reproduction and erasing, the following voltages were applied.

For recording: 20 V
For reproduction: 0.5 V
For erasing: - 5V

Having described about the methods for various recording media in the above Examples, any film forming method capable of preparing an extremely uniform film can be used.

Example 14

A recording/reproducing device shown in Fig. 10 was employed. As the probe electrodes 1002a, b, c, three tungsten probe electrodes 3 were employed. The probe electrodes 1002a, b, c were used for controlling the distance (Z) from the surface of the recording layer 101, and its distance (Z) is finely controlled by a piezoelectric element so that the current may be controlled to be constant. Further, the fine control mechanism 1007 is designed so that fine control may be possible also in the plane (X,Y) direction. However, all of these are known techniques. Also, the probe electrodes 1002a, b, c can be used for direct recording, reproduction and erasing. The recording medium is placed on the XY stage 1014 with high precision and can be moved to any desired position.

Next, the experiments of recording, reproduction and erasing by use of an LB film (8 layers) of squarilium-bis-6-octylazulene (hereinafter abbreviated as SOAZ) formed on the electrode 1003 formed of Au are described in detail.

A recording medium 1 having a recording layer 101 with 8 built-up SOAZ layers was placed on the XY stage 1014, and first the positions of the probe electrodes 1002a, b, c were determined and fixed firmly. Between the Au electrode (the ground side) 1003 and the probe electrode 1002, a voltage of -3.0 V was applied, and the distance (Z) between the probe electrode 1002 and the recording layer 101 surface was controlled while monitoring the current. Thereafter, the distance from the probe electrode 1002 to the surface of the recording layer 101 was changed by controlling the fine control mechanism 1007, whereby the current characteristics as shown in Fig. 2 were obtained. It is required that the probe voltage should be controlled so that the probe current Ip for controlling the distance from the probe electrode 1002 to the surface of the recording layer 101 may be $10^{-7}A \geq Ip \geq 10^{-12}A$, preferably $10^{-8}A \geq Ip \geq 10^{-10}A$.

First, the controlled current was set to the current value of the a region in Fig. 2 ($10^{-7}A$) - (Condition of probe grounding). When the current value was measured by applying reading voltage of 1.5 V which was a voltage not exceeding the threshold voltage which gives rise to electric memory effect between the probe electrode 1002 and the Au electrode 1003, OFF state was exhibited at μA or less. Next, after a triangular pulse voltage having the waveform shown in Fig. 3 which is an voltage of or higher than the threshold voltage Vth ON which gives rise to ON state, the current was again measured by applying a voltage of 1.5 V between the electrodes, whereby a current of about 0.7 mA was found to flow, thus indicating the ON state.

Next, after a triangular pulse voltage with a peak voltage of 5 V and a pulse width of 1 μS which is a voltage of or higher than the threshold voltage Vth OFF at which the change occurs from the ON state to the OFF state, 1.5 V was again applied, whereby it was confirmed that the current value at this time was returned to OFF state at μA or less.

Next, with the probe current Ip being set at $10^{-9}A$ (b region in Fig. 2), the distance Z between the probe electrode 1002a, b, c and the surface of the recording layer 101 was controlled.

While moving the XY stage slowly along the Y-axis under application of a triangular pulse voltage having the waveform as shown in Fig. 3 which is a voltage of the threshold voltage Vth ON or higher at which the ON state occurs at the three probes, the track signal Y track was recorded (Fig. 11A)

The probes 1002 a, b and c were returned to the original positions, then while applying a triangular pulse voltage having the waveform as shown in Fig. 3 which is a voltage of the threshold voltage Vth ON or higher at which the ON state occurs at the two probes (1002-a, c) along the X-axis, track signals along the X-axis were recorded (Fig. 11B).

The remaining one probe (1002-b) wrote the ON state by applying a pulse voltage (15 Vmax, 1 μS) of the threshold voltage Vth, ON or higher having the same waveform as in Fig. 3 at the predetermined position of the timing signal, and also the data were recorded at the remaining sites by use of the same method.

Next, the probe 1002-a was moved along the Y-axis to the track recorded with the probe 1002-c, and the same operation as described above was conducted. At this time, only the probe 1001a performs reading of the track signal. Subsequently, this operation was repeated until a recording medium having the track signals and the data recorded thereon was prepared (Fig. 11C).

Reading can be done by applying a probe voltage of 1.5 V for reading between the probe electrode 1002-b and the counter-electrode 1003, and reading directly the change in current quantity passing between the ON state region and OFF state region or through the servo circuit 1006. In this Example, it was confirmed that the probe current passing through the ON state region was found to be changed by 3 digits or more as compared with that before recording (or the OFF state region).

Further, as the result of tracing again the recording position by setting the probe voltage at 10 V of the threshold voltage Vth OFF or higher, it was also confirmed that all the recorded state was erased to be transited to the OFF state.

Next, by use of the fine control mechanism 1007, the resolving power was measured by writing stripes of 1 μ length with various pitches between 0.001 μ and 0.1 μ, and it was found to be 0.01 μ or less.

The SOAZ-LB film used in the above experiments was prepared as described in Example 1. The evaluation results are shown in Table 3 and the basis of evaluation (A, B, or C) is as described in Example 1.

Example 15

The experiments were conducted in the same manner as in Example 14 except for using t-butyl derivative of luthetium diphthalocyanine [$LuH(Pc)_2$] in place of the SOAZ recording medium used in Example 14. The results are summarized in Table 3. It was found that writing and reading of record could be done at sufficient S/N ratio as in the case of SOAZ.

The built-up conditions of t-butyl derivative of $LuH(Pc)_2$ are shown below.

Solvent: chloroform/trimethylbenzene/acetone (1/1/2)
Concentration: 0.5 mg/ml
Aqueous phase: pure water, water temperature 20°C
Surface pressure: 20 mN/m, vertical moving speed of substrate 3 mm/min.

Examples 16 - 22

Recording media were prepared by use of the substrate electrode materials and the dye compounds shown in Table 4, and the same experiments as in Examples 14 and 15 were conducted with the controlled current value of the probe current set at $10^{-9}$ A to obtain the results shown in Table 4. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 3

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| SOAZ | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| $LuH(Pc)_2$ | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 4

| Example | Substrate Electrode | Dye Compound | Recording Reproduci-bility | Resolving Power |
|---|---|---|---|---|
| 16 | Pt (100 Å) | SOAZ | ○ | Not more than 0.01 μ |
| 17 | Cr/Au (50 Å/400 Å) | Tetraphenylporphyrine derivative * | ○ | Not more than 0.05 μ |
| 18 | ITO (1000 Å) | SOAZ | ○ | Not more than 0.03 μ |
| 19 | Cr/Au (50 Å/400 Å) | Anthracene derivative ** | ○ | Not more than 0.1 μ |
| 20 | Cr/Au (50 Å/400 Å) | Docosylpyradinium-tetracyanoquinodimethane | ○ | Not more than 0.01 μ |
| 21 | Cr/Au (50 Å/400 Å) | Pentacosa-10,12-diynoic acid | ○ | Not more than 0.01 μ |
| 22 | Cr/Ar (50 Å/400 Å) | Bacteriorhodopsin *** | ○ | Not more than 0.05 μ |

*

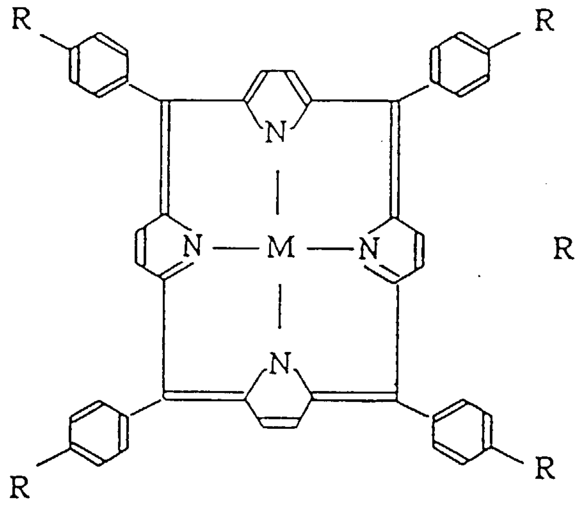

R=OCH (COOH) $C_{20}H_{41}$

**

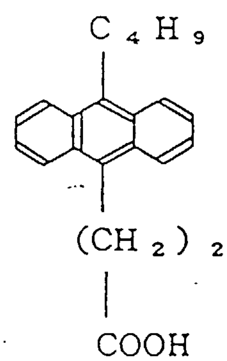

*** violet film extracted from a cultured product obtained by culturing a highly halophilic bacterium according to the known method.

Example 23

When the same experiments were conducted by use of the devices shown in Fig. 10D-F, in place of the devices shown in Fig. 10A-C, the same results were obtained.

In the Examples as described above, the LB method was employed for formation of the dye recording layer, but any film forming method can be used without limitation to the LB method, provided that an extremely thin film can be prepared, and specifically the vacuum vapor deposition method such as an MBE method, a CVD method, etc. may be included.

Applicable materials are not limited to only other organic compounds, but inorganic materials such as chalcogenide compounds, etc. are also applicable.

Further, it is also possible to use an integration of the electrode and the recording layer by use of a semiconductor as the electrode on the recording medium side.

Example 24

With use of Au as the electrode 103 shown in Fig. 1, an LB film having two layers of pentacosa-10, 12-diynoic acid (DA12-8) built up as the recording layer on the Au electrode was used.

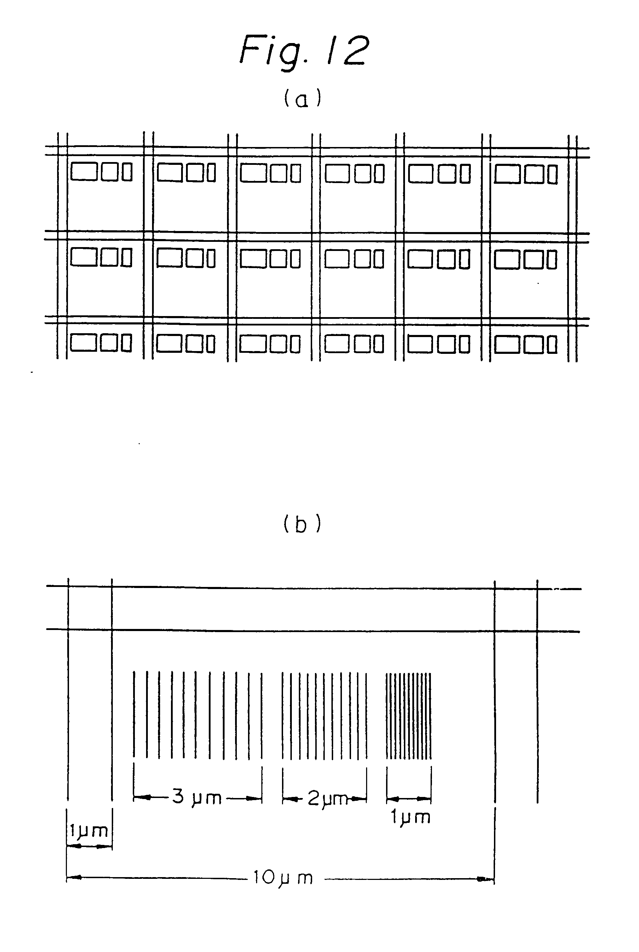

Such polymerizable recording medium was mounted on ELS-3300 electron beam picture drawing device produced by Elionics Co., and a picture was drawn by use of a lattice pattern generating device shown in Fig. 12A under the conditions of an acceleration voltage of 20 kV, a current value of 1 x $10^{-9}$A, a stationary spot diameter of 0.4 μm, an exposure time of 0.5 μsec/spot.

The magnification at this time was 50-fold.

Next, under the conditions of an acceleration voltage of 20 kV, a current value of 1 x $10^{-11}$A, a stationary spot diameter of 0.04 μm, an exposure time of 0.5 μsec/spot, a line pattern in Fig. 12 was similarly drawn within each lattice.

The pattern thus drawn was read by use of a reproducing device shown in Fig. 1. Next, its process is shown.

With the recording medium firmly fixed on the stage, first the position of the probe electrode was determined by visual observation. At a probe voltage set at 2 V, the distance between the probe electrode and the recording medium was controlled so that the probe current became $10^{-9}$ A by controlling the coarse mechanism in the Z direction. After the lattice pattern was first searched by coarse scanning in the direction within the plane (x, y), the line pattern was read by fine scanning within the plane (x, y).It was found that the portion irradiated by the electron beam was polymerized and its film thickness was recognized to be changed (reduced) by about several Å as calculated on the changed amount of servo voltage. Also, the line width read was 0.022 μm and thus it was found that at least a recording resolving power of about 0.02 μm could be obtained.

The DA12-8 recording medium used in the above experiment was prepared as described below.

After an optically polished glass substrate was washed clean with a netural detergent and Trichlene, Cr was deposited to a thickness of 50 Å as the subbing layer by the vacuum vapor deposition method, and further Au was vapor deposited to 400 Å to form a subbing electrode. DA12-8 was dissolved in chloroform at a concentration of 1 x $10^{-3}$M and 200 μl of the resultant solution was spread on an aqueous phase ($MnCl_2$: 5 x $10^{-4}$M, $KHCO_3$: 5 x $10^{-5}$M, pH 6.8, water temperature 20 °C).

After evaporation of the solvent, the surface pressure was enhanced to 20 mN/m, and further while maintaining the pressure to be constant, the above electrode substrate was dipped gently so as to transverse across the water surface and further withdrawn to build up two layers of a monomolecular film. The DA12-8 monomolecular built-up film thus formed on the Au electrode was dried on air for 24 hours to provide a recording medium.

Example 25

Entirely the same experiment as in Example 24 was conducted except for using a recording medium having two layers of ω-tricosenic acid on $n^+$-Si substrate. However, the exposure time was set at 5 μsec/spot. The line width read was 0.013 μm, and a recording resolving power of about 0.01 μm may be expected.

The LB film forming conditions of ω-tricosenic acid were as follows.

Solvent: chloroform
Concentration: 1 mg/ml
Aqueous phase: $H_2O$ (pure water), water temperture 20 °C
Surface pressure: 20 mN/m, vertical substrate moving speed 20 mm/min.

Example 26

Entirely the same experiment as in Example 24. was conducted except for using two-layer built-up film of arachidic acid. However, the exposure time was made 20 μsec/spot. Recording was effected through change in the LB film structure based on generation of heat by electron beam irradiation, and the resolving power was poorer as compared with Examples 36A, 37, with the line width reproduced being 0.062 μm. The LB film forming conditions of arachidic acid were as follows.

Solvent: chloroform
Concentration: 1 mg/ml
Aqueous phase: $CdCl_2$ 5 x $10^{-4}$M, water temperture 20 °C
Surface pressure: 30 mN/m,
vertical substrate moving speed 5 mm/min.

Example 27

On the same Au electrode as in Example 24, perylenetetracarboxylic acid anhydride:

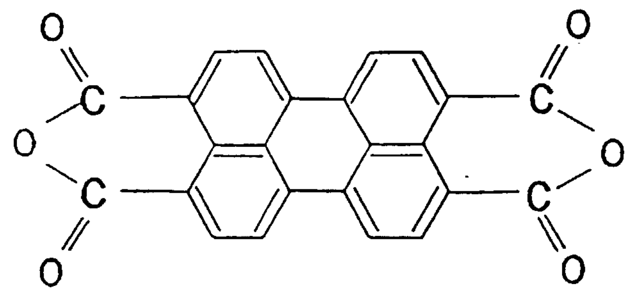

was vacuum vapor deposited (vapor deposition speed 5 Å/sec, film thickness 300 Å) to provide a recording medium, and otherwise the same recording and reproducing experiment as in Example 36A was conducted.

As the result of the experiment conducted at an exposure time of 200 μsec/spot, the electron beam irradiated portion was recognized to be blackened. The line width reproduced with a probe voltage of 2V was found to be 0.04 μm.

Example 28

The pattern shown in Fig. 12 was drawn on a p-form ⟨111⟩ wafer substrate (10 ohm-cm) in the same manner as in Example 24 by injecting $P^+$ ions by means of a converging ion beam device JIBL produced by Nippon Denshi K.K. The injection conditions were as follows.

Ion source accelerating voltage: 40 kV
Ion beam current: 1 nA
Injected amount: 1.3 x $10^{14}$ ions/$cm^2$
Wafer temperature: 300 °C

Next, when the above pattern record was reproduced with a probe voltage of -0.5 V, the line width was found to be 0.083 μm on an average. Thus, it was found that a resolving power of about 0.1 μm or less could be obtained.

As the result of the heat treatment of the above recording medium at 600°C, although the resolving power was reduced to about 0.1 μm, stable reproduced signals could be obtained.

Example 29

The pattern in Fig. 12 was drawn by injecting $I^-$ ions by means of the same converging ion beam device in the same manner as in Example 28 on a recording medium having 13 layers of tetraquinodimethane docosylpyridium built up on an optically polished glass substrate.

The injection conditions were ion source acceleration voltage 40 kV, ion beam current 1000 pA, injected amount 5 x $10^{13}$ ions/$cm^2$, and substrate temperature 20°C.

When pattern reproduction was effected with a probe voltage of 1 V, the line width was found to be 0.1 μm on an average.

In the Examples as described above, electron beam and ion beam were used as the energy beam, but the energy beam is not limited to these, but electromagnetic waves such as visible light, UV-ray and X-ray, etc. can be also used.

Example 30

The SOAZ-LB film used In the above experiments was prepared as described below.

After an optically polished glass substrate (substrate 1004) was washed by use of a neutral detergent and Trichlene, Cr was deposited as the subbing layer by the vacuum deposition method to a thickness of 50 Å, and further Au was vapor deposited by the same method to 400 Å to form a subbing electrode (Au electrode 1003).

Next, a chloroform solution containing SOAZ dissolved at a concentration of 0.2 mg/ml was spread over an aqueous

phase of 20°C to form a monomolecular film on the water surface. After evaporation of the solvent, the surface pressure of such monomolecular film was enhanced to 20 mN/m, and further while this was maintained to be constant, the above electrode substrate was dipped gently at a speed of 5 mm/min. so as to transverse across the water surface, and further withdrawn to have two layers of Y-form monomolecular film built up. By repeating appropriate times of this operation, 6 kinds of 2, 4, 8, 12, 20 and 30 layers of built-up films were formed on the above substrate and used for recording and reproducing experiments. The evaluation results are shown in Table 7.

Evaluation was performed overall from the recording and erasing characteristics after applying the pulse and the erasing voltage, further the ratio of the current value under the recording state to that of the erased state (ON/OFF) and the resolving power, and those with particularly excellent results were rated as A, those with good results as B, and those with relatively somewhat lower results as compared with others as C.

Example 31

The experiments were conducted in the same manner as in Example 30 except for using t-butyl derivative of luthetium diphthalocyanine [$LuH(Pc)_2$] in place of the SOAZ recording medium used in Example 30 The results are summarized in Table 7. It was found that writing and reading of record could be done at sufficient S/N ratio as in the case of SOAZ.

The built-up conditions of t-butyl derivative of $LuH(Pc)_2$ are shown below.

Solvent: chloroform/trimethylbenzene/acetone (1/1/2)
Concentration: 0.5 mg/ml
Aqueous phase: pure water, water temperature 20°C
Surface pressure: 20 mN/m, vertical moving speed of substrate 3 mm/min.

Examples 32 - 38

Recording media were prepared by use of the substrate electrode materials and the dye compounds shown in Table 8, and the same experiments as in Examples 30 and 31 were conducted with the controlled current value of the probe current set at $10^{-9}$ A to obtain the results shown in Table 8. As shown by the mark B in the Table, recording and reproduction could be done at sufficient resolving power and ON/OFF ratio for all of the samples.

The built-up number of the dye LB film was all two layers. Also, the Pt electrode was vapor deposited by use of the EB method, and ITO by the sputtering method, respectively.

Table 7

| Organic Compound | Built-up Number | a Region | | | b Region | | | Resolving Power |
|---|---|---|---|---|---|---|---|---|
| | | Recording Characteristic | ON/OFF Ratio | Erasability | Recording Characteristic | ON/OFF Ratio | Erasability | |
| SOAZ | 2 | A | B | A | A | A | A | Not more than 0.01 μ |
| | 4 | A | B | A | A | A | A | " |
| | 8 | A | A | A | A | A | A | " |
| | 12 | A | A | A | A | A | A | " |
| | 20 | B | A | A | B | A | A | Not more than 0.1 μ |
| | 30 | B | A | A | C | A | A | " |
| $LuH(Pc)_2$ | 2 | A | C | A | A | B | A | Not more than 0.03 μ |
| | 4 | A | B | A | A | A | A | " |
| | 8 | A | B | A | A | A | A | " |
| | 12 | A | A | A | A | A | A | " |
| | 20 | B | A | A | C | A | A | Not more than 0.1 μ |
| | 30 | C | A | A | C | A | A | " |

Table 8

| Example | Substrate Electrode | Dye Compound | Recording Reproducibility | Resolving Power |
|---|---|---|---|---|
| 32 | Pt (100Å) | SOAZ | ○ | Not more than 0.01 μ |
| 33 | Cr/Au (50Å/400Å) | Tetraphenylporphyrine derivative * | ○ | Not more than 0.05 μ |
| 34 | ITO (1000Å) | SOAZ | ○ | Not more than 0.03 μ |
| 35 | Cr/Au (50Å/400Å) | Anthracene derivative ** | ○ | Not more than 0.1 μ |
| 36 | Cr/Au (50Å/400Å) | Docosylpyradinium-tetracyanoquinodimethane | ○ | Not more than 0.01 μ |
| 37 | Cr/Au (50Å/400Å) | Pentacosa-10,12-diynoic acid | ○ | Not more than 0.01 μ |
| 38 | Cr/Ar (50Å/400Å) | Bacteriorhodopsin *** | ○ | Not more than 0.05 μ |

*

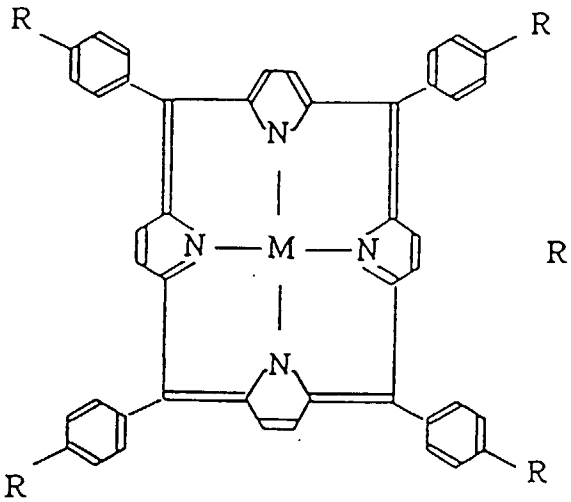

R=OCH (COOH) $C_{20}H_{41}$

**

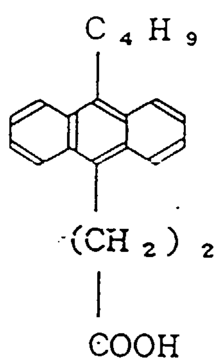

*** violet film extracted from a cultured product obtained by culturing a highly halophilic bacterium according to the known method.

Example 39

When the same experiments were conducted by use of the devices shown in Figs. 10D-F, in place of the devices shown in Figs. 10A-C employed in Examples 30 - 38 the same results were obtained.

In the Examples as described above, the LB method was employed for formation of the dye recording layer, but any film forming method can be used without limitation to the LB method, provided that an extremely thin film can be prepared, and specifically the vacuum vapor deposition method such as an MBE method, a CVD method, etc. may be included.

Applicable materials are not limited to only organic compounds, but inorganic materials such as chalcogenide compounds, etc. are also applicable.

Further, it is also possible to use an integration of the electrode and the recording layer by use of a semiconductor as the electrode on the recording medium side.

More than three probes may be employed although three probes were employed in this example.

Embodiments of the invention enable a recording and reproducing device having the following specific features to be provided.

(1) Even when compared with optical recording, by far higher density recording is possible.
(2) Since the recording layer is formed by building up monomolecular films, the film thickness control could be done easily on the molecular order (several Å to several ten Å). Also, since controllability is excellent, reproducibility is high when forming a recording layer.
(3) Since the recording is thin and good, productivity is high and an inexpensive recording medium can be provided.
(4) The energy required for reproduction is small and the power consumption is little.
(5) The recording speed and reading speed are rapid by providing track.
(6) The error ratio is low due to track and timing signals.
(7) A recording resolving power of 0.01 μm or more can be obtained and a high density recording better by 2 digits or more as compared with the optical recording method of the prior art is possible.
(8) Because the energy required for reading of record is small, there is no destruction of record accompanied with reproduction. Therefore, a large capacity file memory with good stability can be realized.
(9) The structure of the recording medium is simple and its preparation process is also simple. Therefore, due to excellent controllability, reproducibility is high when the element is formed and also productivity is rich.
(10) The scope of organic materials and inorganic materials which can be utilized for recording medium is broad, and also a very cheap recording medium can be provided.

## Claims

**1.** An apparatus for performing at least the function of recording information on an information recording medium (101) comprising:

a probe electrode (102;1002) designed to be disposed in opposition to a recording medium (101);
means (108;1008) for applying a writing voltage pulse, across said recording medium and said probe electrode (102; 1002);
means (105) for detecting the current flow between said recording medium (101) and said probe electrode (102; 1002);
a mechanism (107) for adjusting the distance between said recording medium (101) and said probe electrode (102; 1002); and
servo means (106;1006) for controlling said mechanism (107) to maintain a substantially constant current flow between said recording medium (101) and said probe electrode (102, 1002) by feeding back a control signal to said mechanism (107),
the apparatus being characterised in that:
said servo means (106; 1006) includes means for controlling the value of said control signal fed back to said mechanism (107) at a constant level when a recording voltage pulse is applied across said recording medium (101) and said probe electrode (102; 1002).

**2.** An apparatus as claimed in claim 1, wherein said means (108;1008) for applying a voltage is adapted to apply a substantially constant reading voltage whereby any changes of the current flowing between said recording medium (101) and said probe electrode (102; 1002) can be detected by said detecting means (105).

**3.** An apparatus as claimed in claim 1 or claim 2 in which said means (108; 1008) for applying a voltage is adapted to apply a voltage effective to erase information recorded on the recording medium (101).

**4.** A system for performing at least of the functions of recording information on a recording medium, including an apparatus according to any one of claims 1 to 3 and a recording medium (101).

**5.** A system according to claim 4, wherein said recording medium (101) can undergo a transition from a first state to a second state, said second state having a different electrical conductivity to that of the first state, and in that the state transition can be effected by application of the writing voltage and/or detected by application of the reading voltage.

**6.** A method of recording information on an information recording medium (101) using:

a probe electrode (102;1002) designed to be disposed in opposition to a recording medium (101);
comprising the steps of:
applying a writing voltage pulse, across said recording medium and said probe electrode (102; 1002);

detecting the current flow between said recording medium (101) and said probe electrode (102; 1002);
using a mechanism (107) to adjust the distance between said recording medium (101) and said probe electrode (102; 1002); and
controlling said mechanism (107) to maintain a substantially constant current flow between said recording medium (101) and said probe electrode (102, 1002) by feeding back a control signal to said mechanism (107), the method being characterised by the steps of:
controlling the value of said control signal fed back to said mechanism (107) at a constant level when a recording voltage pulse is applied across said recording medium (101) and said probe electrode (102; 1002).

**7.** A method as claimed in claim 6, including the step of applying a substantially constant reading voltage whereby any changes of the current flowing between said recording medium (101) and said probe electrode (102; 1002) can be detected.

**8.** A method as claimed in claim 6 or claim 7 in including the step of applying a voltage effective to erase information recorded on the recording medium (101).

**Patentansprüche**

**1.** Gerät zur Durchführung von zumindest der Funktion zur Aufzeichnung von Informationen auf einen Informations-Aufzeichnungsträger (101) mit:

einer gegenüber einem Aufzeichnungsträger (101) angeordneten Prüfelektrode (102; 1002),
einer Einrichtung (108; 1008) zum Anlegen eines Schreib-Spannungsimpulses über den Aufzeichnungsträger und die Prüfelektrode (102; 1002),
einer Einrichtung (105) zur Erfassung des Stromflusses zwischen dem Aufzeichnungsträger (101) und der Prüfelektrode (102; 1002),
einem Mechanismus (107) zur Einstellung des Abstands zwischen dem Aufzeichnungsträger (101) und der Prüfelektrode (102; 1002) und
einer Servoeinrichtung (106; 1006) zur Steuerung des Mechanismus (107) zur Aufrechterhaltung eines im wesentlichen konstanten Stromflusses zwischen dem Aufzeichnungsträger (101) und der Prüfelektrode (102; 1002) mittels Rückführung eines Steuersignals zu dem Mechanismus (107),

**dadurch gekennzeichnet, daß**
die Servoeinrichtung (106; 1006) eine Einrichtung zur Steuerung des Wertes des zu dem Mechanismus (107) rückgeführten Steuersignals bei einem konstanten Pegel aufweist, wenn über den Aufzeichnungsträger (101) und die Prüfelektrode (102; 1002) ein Aufzeichnungs-Spannungsimpuls angelegt wird.

**2.** Gerät nach Anspruch 1,
**dadurch gekennzeichnet, daß**
an die Einrichtung (108; 1008) zum Anlegen einer Spannung eine im wesentlichen konstante Lesespannung anlegt wird, wodurch jegliche Änderungen des Stromflusses zwischen dem Aufzeichnungsträger (101) und der Prüfelektrode (102; 1002) durch die Erfassungseinrichtung (105) erfaßt werden können.

**3.** Gerät nach Anspruch 1 oder 2,
**dadurch gekennzeichnet, daß**
die Einrichtung (108; 1008) zum Anlegen einer Spannung eine die Löschung von auf dem Aufzeichnungsträger (101) aufgezeichneten Informationen bewirkende Spannung anlegt.

**4.** System zur Durchführung von zumindest der Funktion zur Aufzeichnung von Informationen auf einen Aufzeichnungsträger mit einem Gerät nach einem der Ansprüche 1 bis 3 und einem Aufzeichnungsträger (101).

**5.** System nach Anspruch 4, wobei der Aufzeichnungsträger (101) von einem ersten Zustand in einen zweiten Zustand übergehen kann, wobei der zweite Zustand gegenüber dem ersten Zustand eine unterschiedliche elektrische Leitfähigkeit aufweist und wobei der Zustandsübergang durch Anlegen der Schreibspannung bewirkt und/oder durch Anlegen der Lesespannung erfaßt werden kann.

**6.** Verfahren zur Aufzeichnung von Informationen auf einen Informations-Aufzeichnungsträger (101) unter Verwendung

einer gegenüber einem Aufzeichnungsträger (101) angeordneten Prüfelektrode (102; 1002), mit den Schritten
Anlegen eines Schreib-Spannungsimpulses über den Aufzeichnungsträger und die Prüfelektrode (102; 1002),
Erfassen des Stromflusses zwischen dem Aufzeichnungsträger (101) und der Prüfelektrode (102; 1002),
Verwenden eines Mechanismus (107) zur Einstellung des Abstands zwischen dem Aufzeichnungsträger (101) und der Prüfelektrode (102; 1002) und
Steuern des Mechanismus (107) zur Aufrechterhaltung eines im wesentlichen konstanten Stromflusses zwischen dem Aufzeichnungsträger (101) und der Prüfelektrode (102; 1002) mittels Rückführung eines Steuersignals zu dem Mechanismus (107),

**gekennzeichnet durch** den Schritt
Steuern des Wertes des zu dem Mechanismus (107) rückgeführten Steuersignals bei einem konstanten Pegel, wenn über den Aufzeichnungsträger (101) und die Prüfelektrode (102; 1002) ein Aufzeichnungs-Spannungsimpuls angelegt wird.

**7.** Verfahren nach Anspruch 6 mit dem Schritt
Anlegen einer im wesentlichen konstanten Lesespannung, wodurch jegliche Änderungen des Stromflusses zwischen dem Aufzeichnungsträger (101) und der Prüfelektrode (102; 1002) erfaßt werden können.

**8.** Verfahren nach Anspruch 6 oder 7 mit dem Schritt
Anlegen einer die Löschung von auf dem Aufzeichnungsträger (101) aufgezeichneten Informationen bewirkenden Spannung.

## Revendications

**1.** Appareil pour exécuter au moins la fonction d'enregistrement d'informations sur un support (101) d'enregistrement d'informations, comportant :

une électrode de sonde (102 ; 1002) conçue pour être disposée en opposition à un support d'enregistrement (101) ;
des moyens (108 ; 1008) destinés à appliquer une impulsion de tension d'écriture entre ledit support d'enregistrement et ladite électrode de sonde (102 ; 1002) ;
des moyens (105) destinés à détecter le flux de courant entre ledit support d'enregistrement (101) et ladite électrode de sonde (102 ; 1002) ;
un mécanisme (107) destiné à ajuster la distance entre ledit support d'enregistrement (101) et ladite électrode de sonde (102 ; 1002) ; et
des moyens d'asservissement (106 ; 1006) destinés à commander le mécanisme (107) pour maintenir un flux de courant sensiblement constant entre ledit support d'enregistrement (101) et ladite électrode de sonde (102, 1002) en renvoyant par rétroaction un signal de commande audit mécanisme (107),
l'appareil étant caractérisé en ce que :
lesdits moyens d'asservissement (106 ; 1006) comprennent un moyen destiné à commander la valeur dudit signal de commande renvoyé par rétroaction audit mécanisme (107) à un niveau constant lorsqu'une impulsion de tension d'enregistrement est appliquée entre ledit support d'enregistrement (101) et ladite électrode de sonde (102 ; 1002).

**2.** Appareil selon la revendication 1, dans lequel lesdits moyens (108 ; 1008) destinés à appliquer une tension sont conçus pour appliquer une tension de lecture sensiblement constante de manière que toutes variations du courant circulant entre ledit support d'enregistrement (101) et ladite électrode de sonde (102 ; 1002) puissent être détectées par lesdits moyens de détection (105).

**3.** Appareil selon la revendication 1 ou la revendication 2, dans lequel lesdits moyens (108 ; 1008) destinés à appliquer une tension sont conçus pour appliquer une tension ayant pour effet d'effacer des informations enregistrées sur le support d'enregistrement (101).

**4.** Système pour exécuter au moins les fonctions d'enregistrement d'informations sur un support d'enregistrement,

comprenant un appareil selon l'une quelconque des revendications 1 à 3 et un support d'enregistrement (101).

**5.** Système selon la revendication 4, dans lequel ledit support d'enregistrement (101) peut subir une transition d'un premier état à un second état, ledit second état ayant une conductivité électrique différente de celle du premier état, et en ce que la transition d'états peut être effectuée par l'application de la tension d'écriture et/ou détectée par l'application de la tension de lecture.

**6.** Procédé d'enregistrement d'informations sur un support (101) d'enregistrement d'informations utilisant :

une électrode sonde (102 ; 1002) conçue pour être disposée en opposition à un support d'enregistrement (101) comprenant les étapes dans lesquelles :
on applique une impulsion de tension d'écriture entre ledit support d'enregistrement et ladite électrode de sonde (102 ; 1002) ;
on détecte le flux de courant entre ledit support d'enregistrement (101) et ladite électrode de sonde (102 ; 1002) ;
on utilise un mécanisme (107) pour ajuster la distance entre ledit support d'enregistrement (101) et ladite électrode de sonde (102 ; 1002) ; et
on commande ledit mécanisme (107) pour maintenir un flux de courant sensiblement constant entre ledit support d'enregistrement (101) et ladite électrode de sonde (102, 1002) en renvoyant par rétroaction un signal de commande audit mécanisme (107),
le procédé étant caractérisé par les étapes dans lesquelles :
on commande la valeur dudit signal de commande renvoyé par rétroaction audit mécanisme (107) à un niveau constant lorsqu'une impulsion de tension d'enregistrement est appliquée entre ledit support d'enregistrement (101) et ladite électrode de sonde (102 ; 1002).

**7.** Procédé selon la revendication 6, comprenant l'étape d'application d'une tension de lecture sensiblement constante, grâce à quoi toutes variations du courant circulant entre ledit support d'enregistrement (101) et ladite électrode de sonde (102 ; 1002) peuvent être détectées.

**8.** Procédé selon la revendication 6 ou la revendication 7, comprenant l'étape d'application d'une tension ayant pour effet d'effacer des informations enregistrées sur le support d'enregistrement (101).

Fig. 1

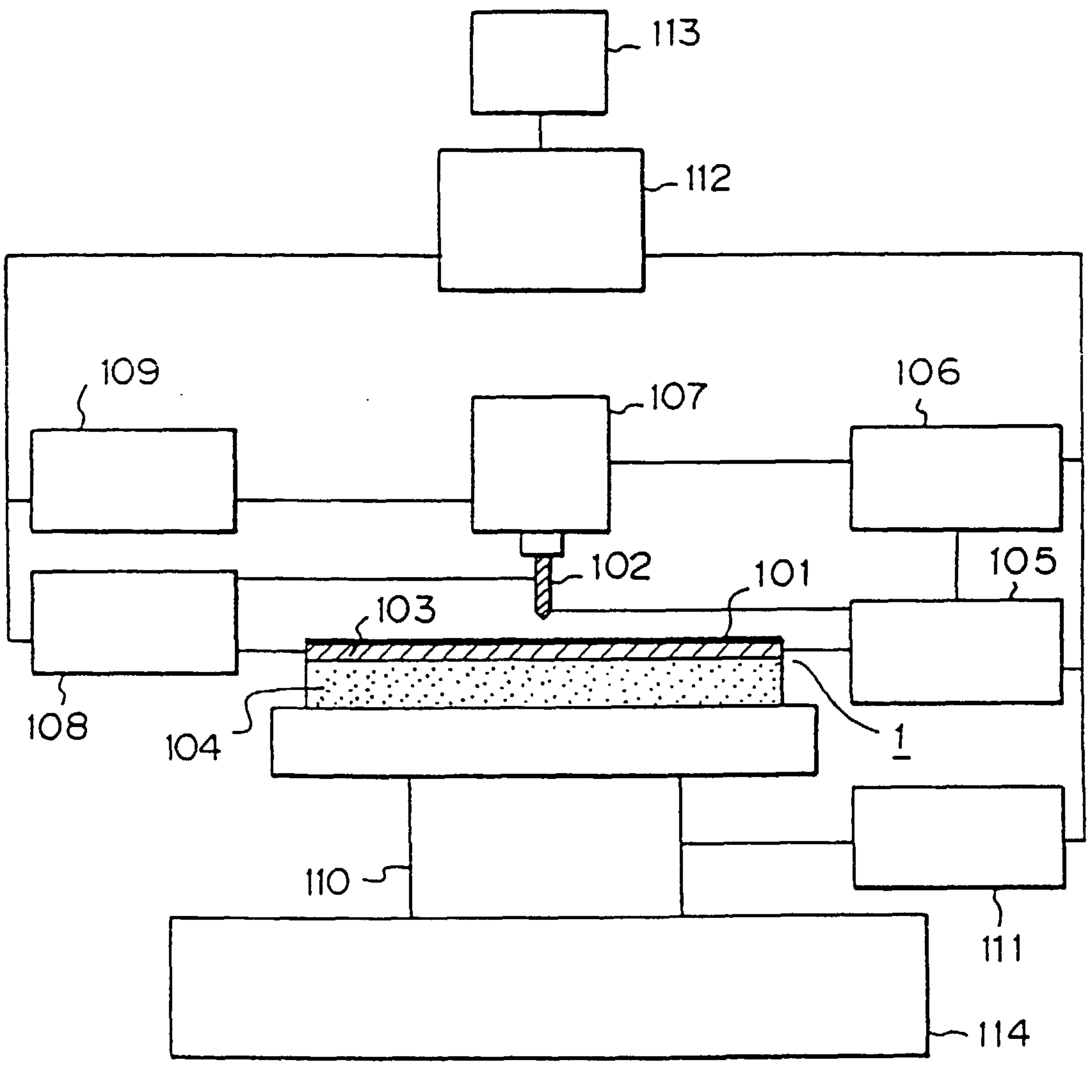

Fig. 2

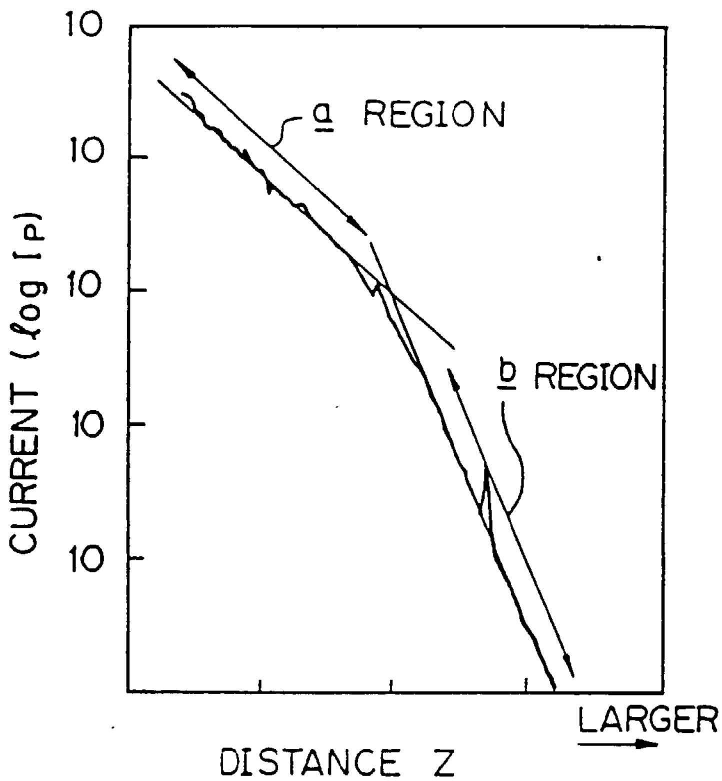
10
10
10
10
10
CURRENT ( ℓog Ip)
a REGION
b REGION
DISTANCE Z
LARGER

Fig. 3

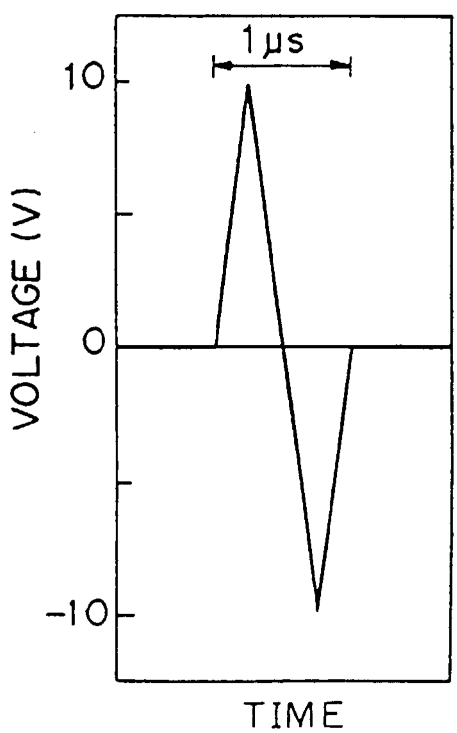
1 μs
10
0
-10
VOLTAGE (V)
TIME

Fig.4

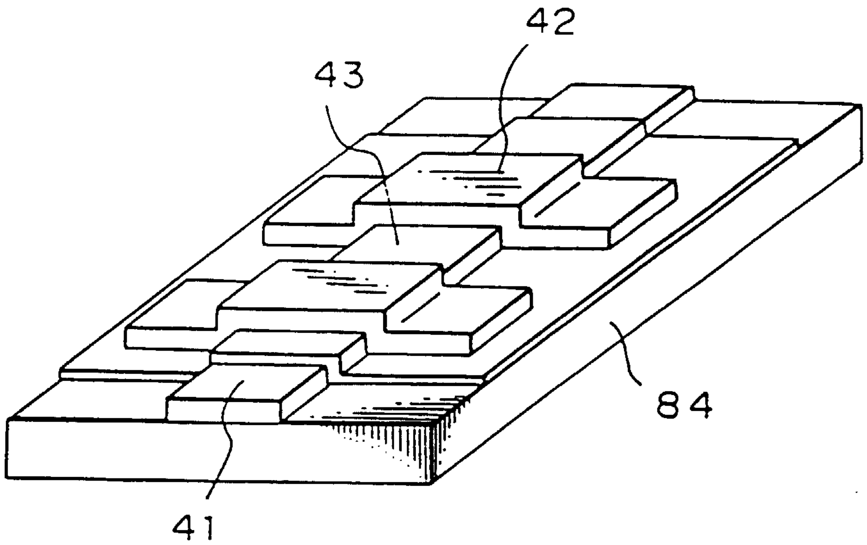


Fig. 5

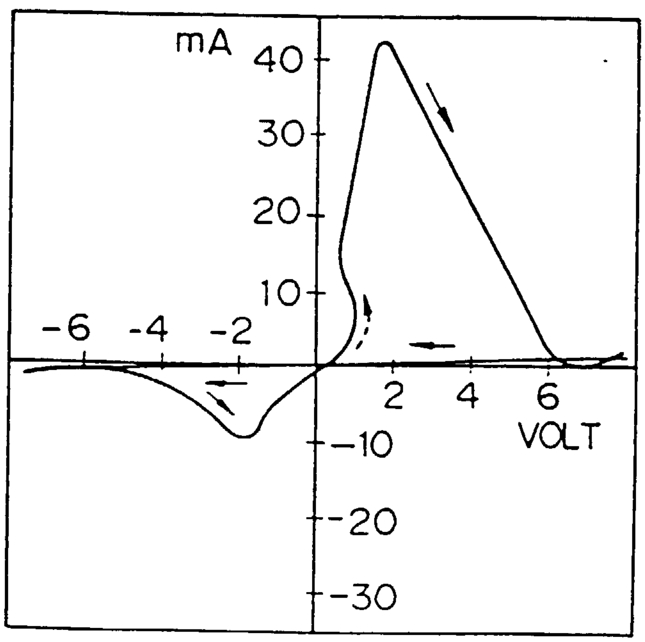

Fig. 6

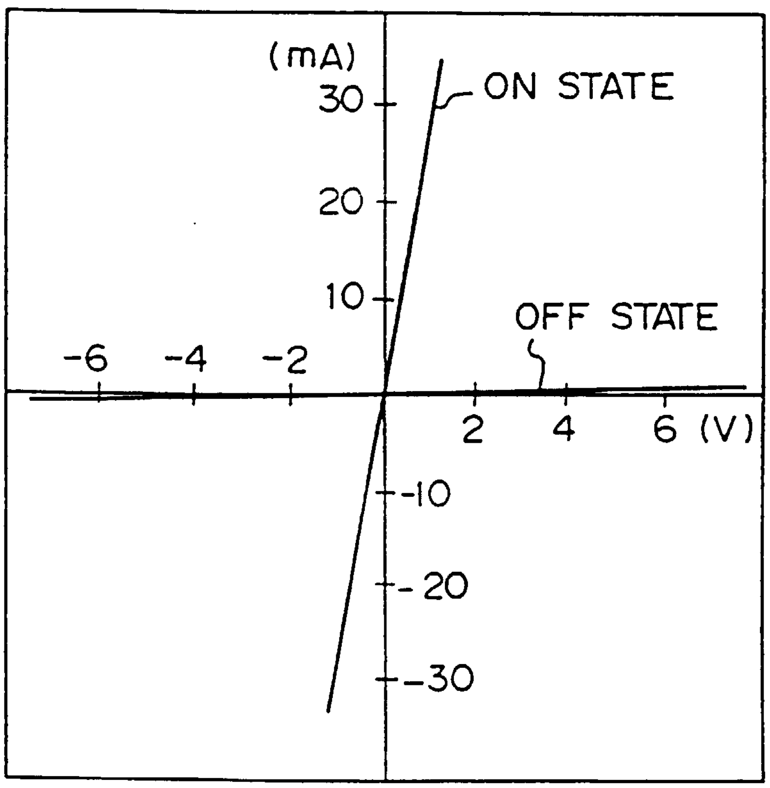

Fig. 7

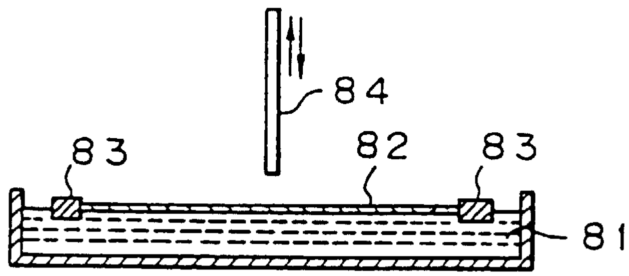


Fig. 8 A

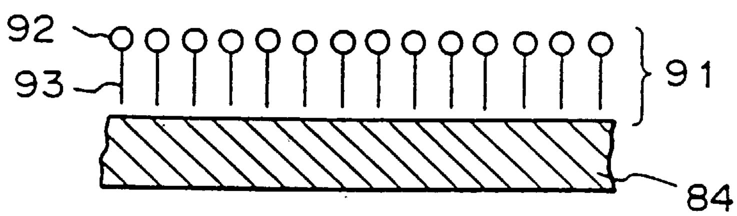


Fig. 8 B

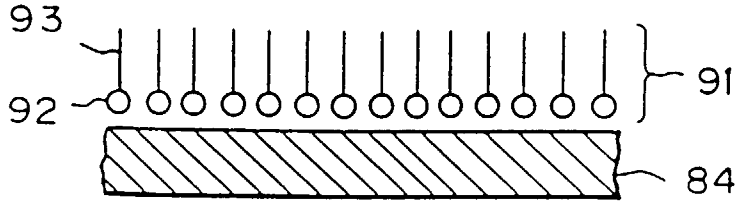

Fig: 9A

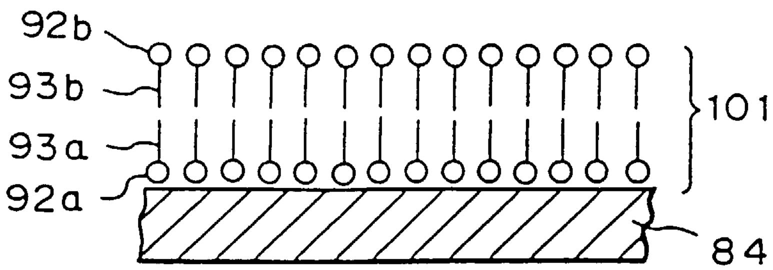


Fig. 9B

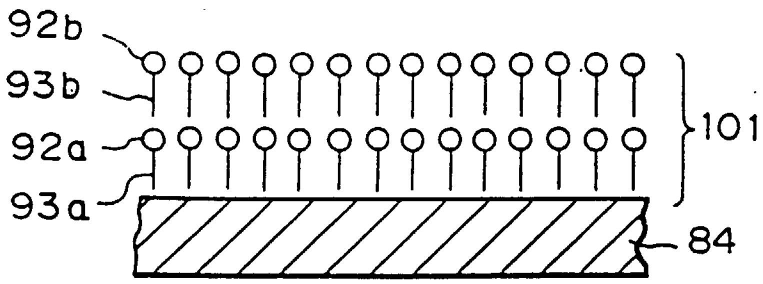


Fig. 9C

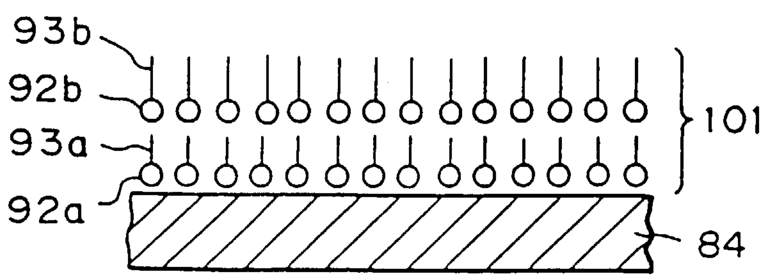

Fig. 10A

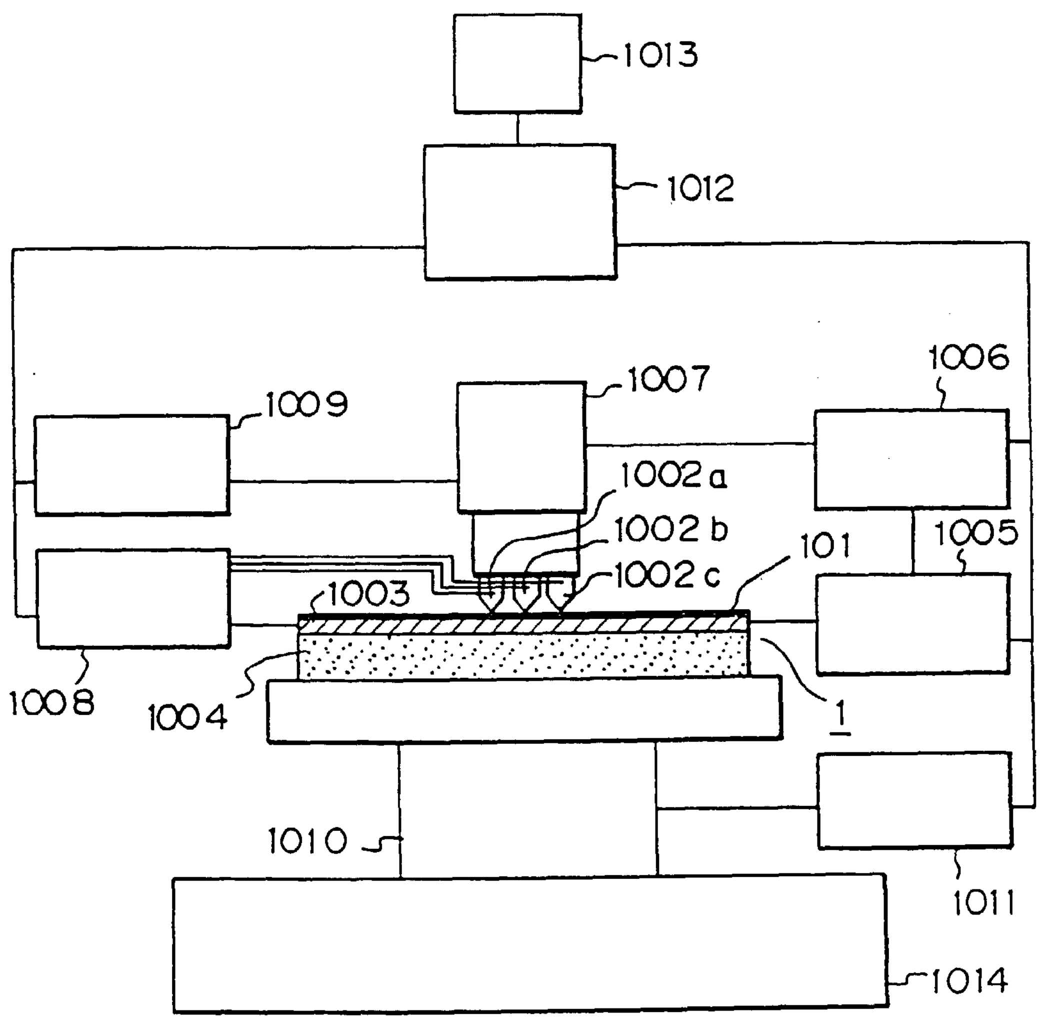
1013
1012
1009
1007
1006
1002a
1002b
1005
101
1002c
1003
1008
1004
1
1010
1011
1014

Fig. 10B

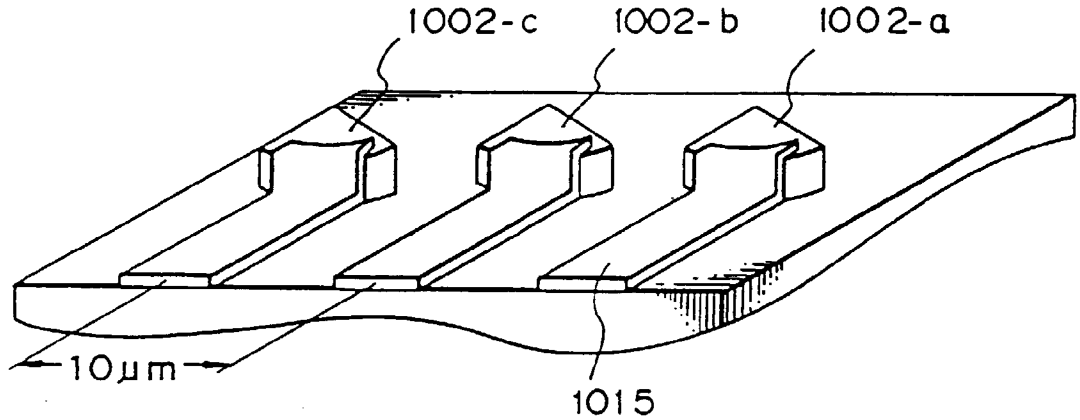


Fig. 10C

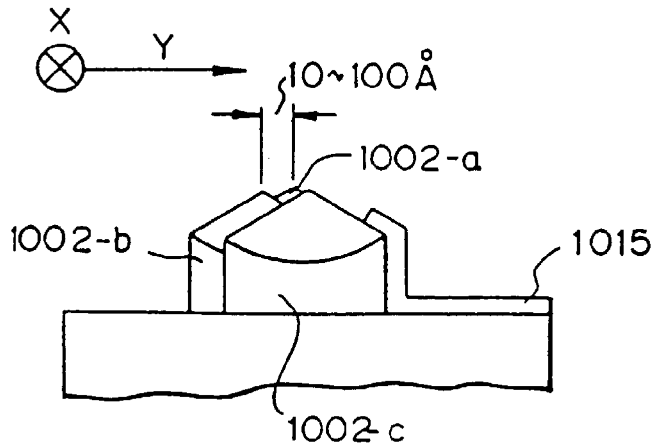

Fig. 10 D

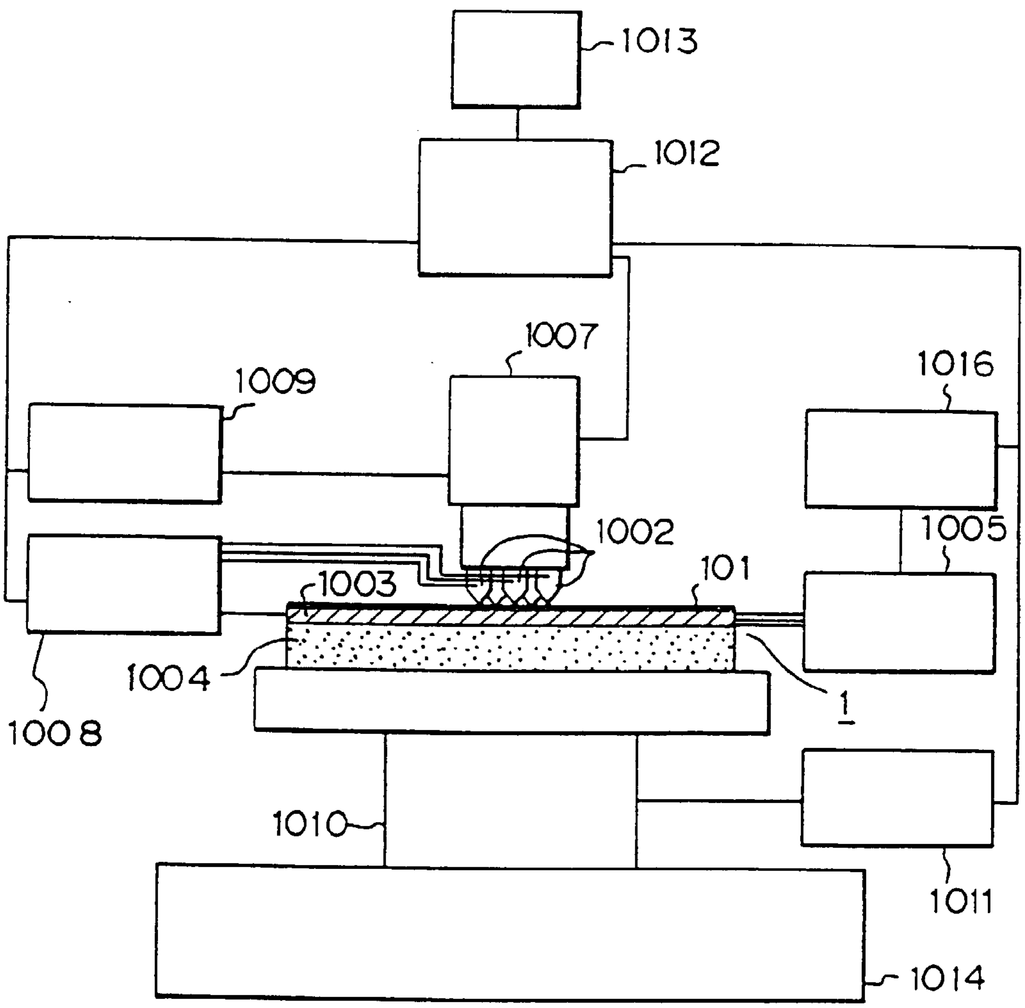
1013
1012
1007
1009
1016
1002
1005
1003
101
1004
1
1008
1010
1011
1014

Fig. 10E

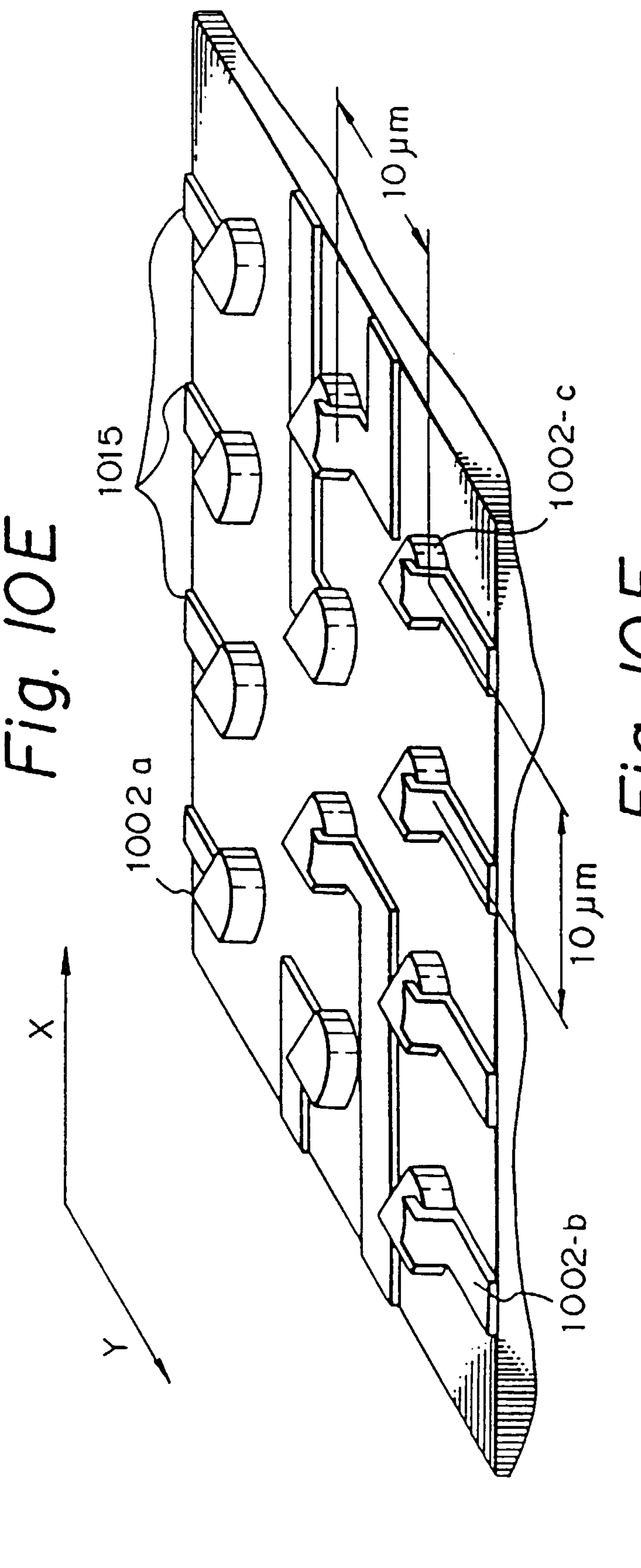


Fig. 10F

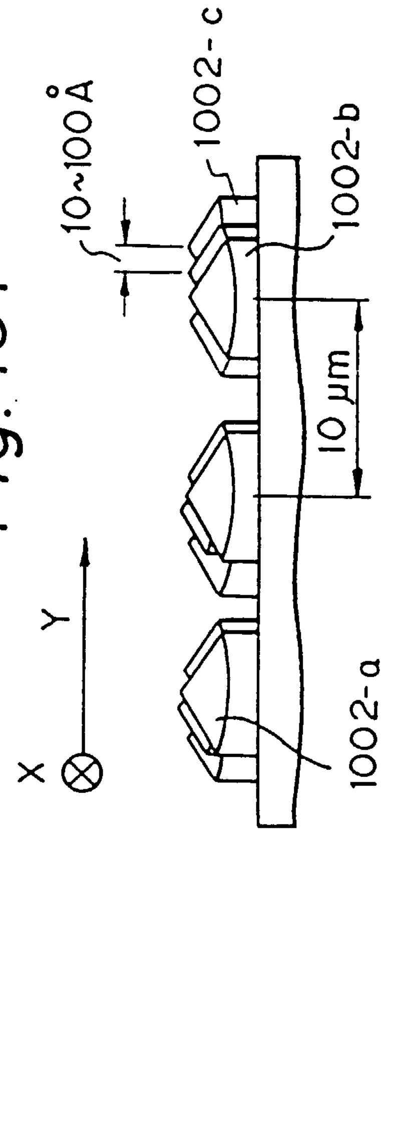

Fig. 11

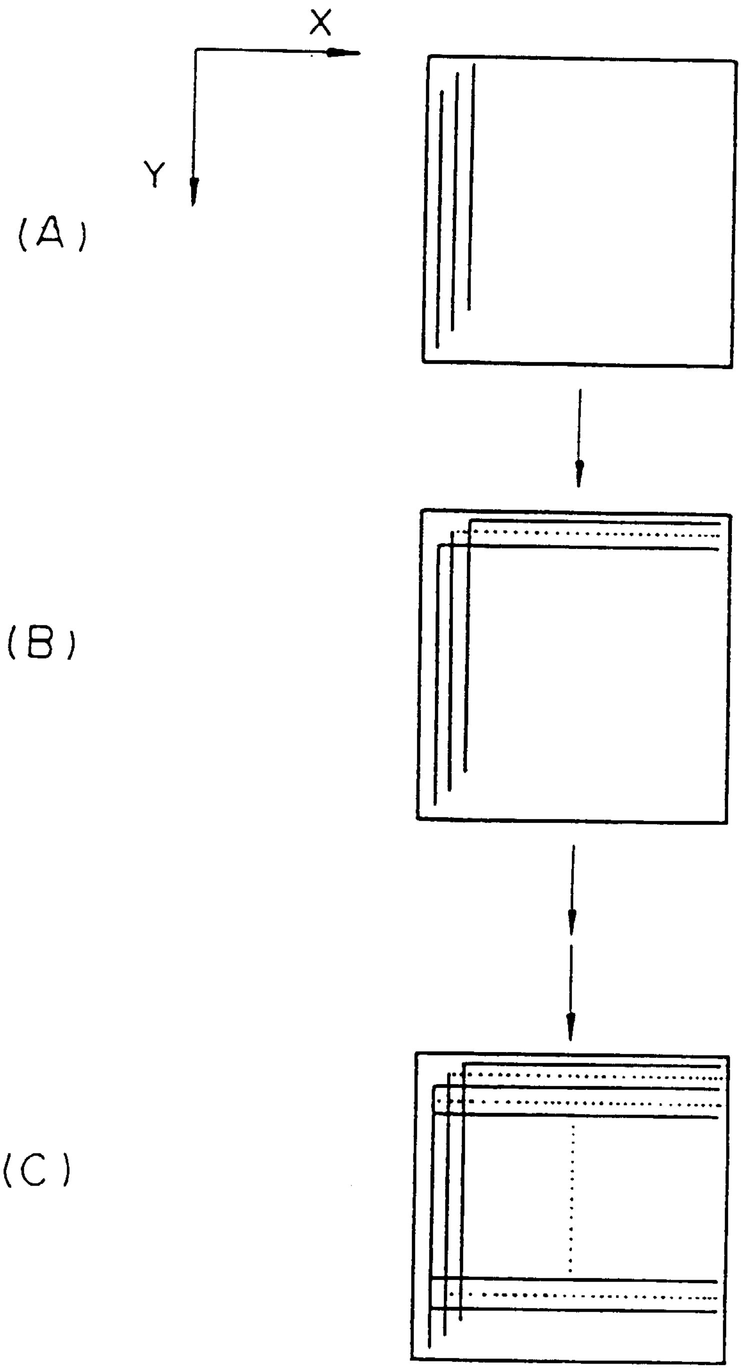

Fig. 12

(a)

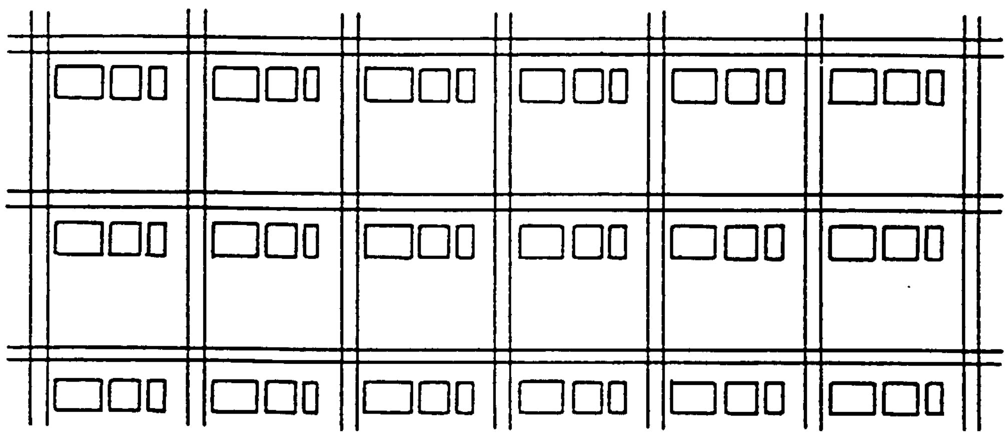

(b)